(19) Europäisches Patentamt
European Patent Office
Office européen des brevets

(11) **EP 3 633 839 A1**

(12) **EUROPÄISCHE PATENTANMELDUNG**

(43) Veröffentlichungstag:
**08.04.2020 Patentblatt 2020/15**

(51) Int Cl.:
***H02M 3/335*** (2006.01)

(21) Anmeldenummer: **18198696.9**

(22) Anmeldetag: **04.10.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **EGSTON Power Electronics GmbH**
**3400 Klosterneuburg (AT)**

(72) Erfinder:
• **KRISMER, Florian**
**8954 Geroldswil (CH)**
• **KOLAR, Johann Walter**
**8044 Zürich (CH)**
• **BÖHLER, Julian Marius**
**8006 Zürich (CH)**

(74) Vertreter: **Frei Patent Attorneys**
**Frei Patentanwaltsbüro AG**
**Postfach**
**8032 Zürich (CH)**

(54) **MEHRPHASIGER, POTENTIALGETRENNTER GLEICHSPANNUNGSKONVERTER**

(57) Ein mehrphasiger, potentialgetrennter Gleichspannungskonverter (10) weist einen HF-Wechselrichter (1), eine HF-Transformatoranordnung (3) und $m$ HF-Gleichrichter (5) auf. Eine Steuerung verwendet mindestens folgende im Betrieb anpassbare Steuerparameter, wobei $1 \le k \le m$:

$d_{k,p}$
Tastverhältnis des Steuersignals der $k$-ten Halbbrücke des HF-Wechselrichters;

$d_{ak,s}$
Tastverhältnis des Steuersignals der ersten Halbbrücke des $k$-ten HF-Gleichrichters;

$d_{bk,s}$
Tastverhältnis des Steuersignals der zweiten Halbbrücke des $k$-ten HF-Gleichrichters;

$\alpha_k$

Phasenwinkel zwischen der steigenden Flanke des Steuersignales der ersten Halbbrücke des HF-Wechselrichters und der $k$-ten Halbbrücke des HF-Wechselrichters;

$\beta_{ak}$
Phasenwinkel zwischen der steigenden Flanke des Steuersignals der ersten Halbbrücke des HF-Wechselrichters ($s_{1,p}$) und der steigenden Flanke des Steuersignals der ersten Halbbrücke des $k$-ten HF-Gleichrichters ($s_{ak,s}$);

$\beta_{bk}$
Phasenwinkel zwischen der steigenden Flanke des Steuersignals $s_{1,p}$ und der steigenden Flanke des Steuersignals der zweiten Halbbrücke des $k$-ten HF-Gleichrichters ($s_{bk,s}$).

Fig. 1

EP 3 633 839 A1

## Beschreibung

Die Erfindung betrifft das Gebiet der elektronischen Umrichter, insbesondere einen potentialgetrennten Gleichspannungskonverter zum Erzeugen mehrerer potentialgetrennter Gleichspannungen.

## Hintergrund

Für eine interne Stromversorgung einer Power-Hardware-In-the-Loop (P-HIL) Testanlage sind eine bestimmte Anzahl anlageninterner Gleichspannungsanschlüsse mit Energie zu versorgen, wobei jeder anlageninterne Gleichspannungsanschluss über einen Plus- und einen Minusanschluss verfügt, welche beide gegenüber einem Bezugspotential (= Erdpotential) und gegenüber den Plus- und Minusanschlüssen aller anderen anlageninternen Gleichspannungsanschlüsse galvanisch getrennt sein müssen. Hinzu kommt, dass an jedem anlageninternen Gleichspannungsanschluss nicht nur Energieverbrauch, sondern auch Energieeinspeisung eintreten kann. Die Anzahl der zu versorgenden, anlageninternen Gleichspannungsanschlüsse wird im Folgenden mit m, m > 1, bezeichnet.

Im einfachsten Fall realisieren m Gleichspannungskonverter mit jeweils einem potentialgetrennten Gleichspannungsanschluss die Versorgung der $m$ anlageninternen Gleichspannungsanschlüsse, d.h. für $1 \le k \le m$ gilt: der Plusanschluss des $k$-ten potentialgetrennten Gleichspannungsanschlusses wird mit dem Plusanschluss des $k$-ten anlageninternen Gleichspannungsanschlusses verbunden und der Minusanschluss des $k$-ten potentialgetrennten Gleichspannungsanschlusses wird mit dem Minusanschluss des $k$-ten anlageninternen Gleichspannungsanschlusses verbunden. Die Gleichspannungskonverter mit jeweils einem potentialgetrennten Gleichspannungsanschluss realisieren drei Funktionen:

- die Stabilisierung der zwischen den Plus- und Minusanschlüssen der potentialgetrennten Gleichspannungsanschlüsse anliegenden Spannungen,
- die galvanische Trennung zwischen einem die Testanlage versorgenden Stromversorgungsnetz und den potentialgetrennten Gleichspannungsanschlüssen sowie die galvanische Trennung zwischen den m potentialgetrennten Gleichspannungsanschlüssen und
- den bidirektionalen Leistungsbetrieb, d.h. Speisen und Rückspeisen elektrischer Energie, an allen m potentialgetrennten Gleichspannungsanschlüssen.

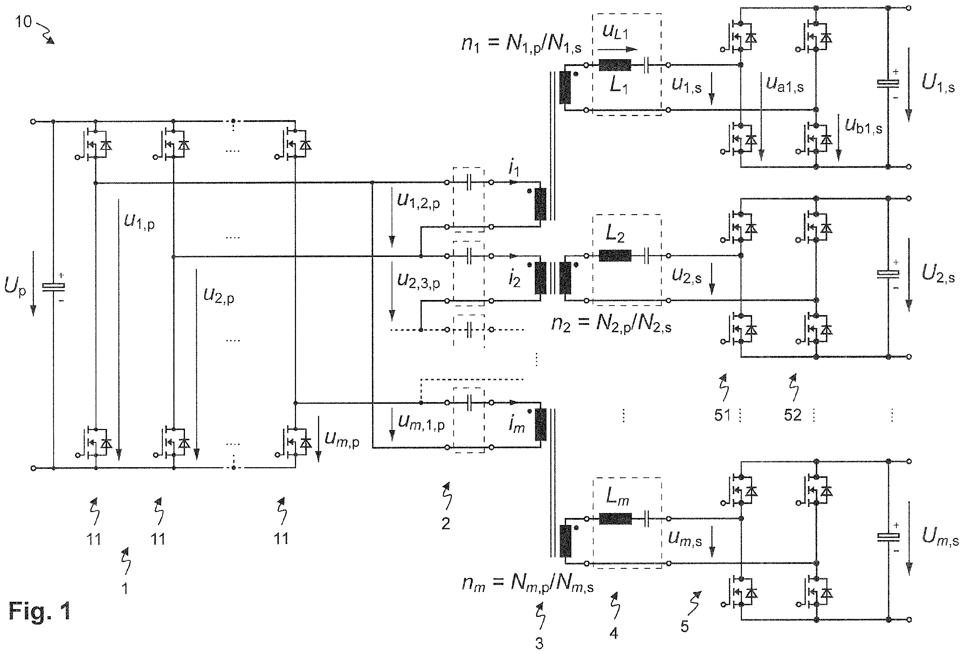

Aus Gründen der Wirtschaftlichkeit, der Effizienz und/oder des benötigten Bauvolumens kann es sinnvoll sein, die m Gleichspannungskonverter mit jeweils einem potentialgetrennten Gleichspannungsausgang durch einen mehrphasigen Gleichspannungskonverter zu ersetzen, wie in **Fig. 1** dargestellt. Solche Gleichspannungskonverter sind für drei Phasen bekannt. Der mehrphasige Gleichspannungskonverter (10) weist primärseitig einen nichtpotentialgetrennten Gleichspannungsanschluss und sekundärseitig $m$ potentialgetrennte Gleichspannungsanschlüsse auf. Zwischen dem nichtpotentialgetrennten Gleichspannungsanschluss und den potentialgetrennten Gleichspannungsanschlüssen weist der mehrphasige Gleichspannungskonverter eine bidirektionale Hochfrequenzwechselrichterschaltung (HF-Wechselrichter) 1, m Hochfrequenztransformatoren (HF-Transformatoren) 3, $m$ primärseitige Hochfrequenznetzwerke (primärseitige HF-Netzwerke) 2, $m$ sekundärseitige Hochfrequenznetzwerke (sekundärseitige HF-Netzwerke) 4 und m bidirektionale Hochfrequenzgleichrichterschaltungen (HF-Gleichrichter) 5 auf:

- Der HF-Wechselrichter besteht aus m Halbbrücken 11, jeweils aufweisend zwei Leistungsschalter, ihrerseits jeweils aufweisend die Parallelschaltung eines eigentlichen Schaltelements und einer antiparallelen Diode (falls z.B. ein MOSFET als Leistungsschalter verwendet wird, ist die antiparallele Diode aufgrund der internen Halbleiterstruktur des MOSFETs bereits vorhanden). Die zwei Leistungsschalter jeder Halbbrücke werden in Serie geschaltet und zwar so, dass die Anode der antiparallelen Diode im ersten Leistungsschalter mit der Kathode der antiparallelen Diode im zweiten Leistungsschalter verbunden ist. Diese Serienschaltung stellt somit drei Anschlüsse zur Verfügung: einen Schaltspannungsanschluss der Halbbrücke, einen Plusanschluss der Halbbrücke und einen Minusanschluss der Halbbrücke. Der Schaltspannungsanschluss der Halbbrücke befindet sich zwischen den in Serie geschalteten Leistungsschaltern, der Plusanschluss der Halbbrücke befindet sich bei der Kathode der antiparallelen Diode des ersten Leistungsschalters und der Minusanschluss der Halbbrücke befindet sich bei der Anode der antiparallelen Diode des zweiten Leistungsschalters. Die Plusanschlüsse aller m Halbbrücken des HF-Wechselrichters sind mit dem Plusanschluss des nichtpotentialgetrennten Gleichspannungsanschlusses verbunden. Die Minusanschlüsse aller m Halbbrücken des HF-Wechselrichters sind mit dem Minusanschluss des nichtpotentialgetrennten Gleichspannungsanschlusses verbunden. Der HF-Wechselrichter weist mindestens einen eingangsseitigen Zwischenkreiskondensator, aufweisend einen Plus- und einen Minusanschluss, auf. Der Plusanschluss des eingangsseitigen Zwischenkreiskondensators ist mit dem Plusanschluss des nichtpotentialgetrennten Gleichspannungsanschlusses verbunden und der Minusanschluss des eingangsseitigen Zwischenkreiskondensators ist mit dem Minusanschluss des nichtpotentialgetrennten Gleichspannungsanschlusses verbunden. Zwischen den Plus- und Minusanschlüssen des nichtpotentialgetrennten Gleichspannungsanschlusses liegt die Spannung $U_p$ an.

∘ Jeder der m HF-Gleichrichter besteht aus zwei Halbbrücken 51, 52, die folgendermassen zu Vollbrücken verschaltet sind: die Plusanschlüsse der beiden Halbbrücken des $k$-ten HF-Gleichrichters, $1 \leq k \leq m$, sind mit dem Plusanschluss des $k$-ten potentialgetrennten Gleichspannungsanschlusses verbunden. Die Minusanschlüsse der beiden Halbbrücken 51, 52 des $k$-ten HF-Gleichrichters, $1 \leq k \leq m$, sind mit dem Minusanschluss des $k$-ten potentialgetrennten Gleichspannungsanschlusses verbunden. Jeder HF-Gleichrichter weist mindestens einen ausgangsseitigen Zwischenkreiskondensator, aufweisend einen Plus- und einen Minusanschluss, auf. Der Plusanschluss des ausgangsseitigen Zwischenkreiskondensators des $k$-ten HF-Gleichrichters ist mit dem Plusanschluss des $k$-ten potentialgetrennten Gleichspannungsanschlusses verbunden und der Minusanschluss des ausgangsseitigen Zwischenkreiskondensators des $k$-ten HF-Gleichrichters ist mit dem Minusanschluss des $k$-ten potentialgetrennten Gleichspannungsanschlusses verbunden. Für $1 \leq k \leq m$ gilt: ein Ausgangsstrom des $k$-ten sekundärseitigen HF-Gleichrichters ist definiert als der Mittelwert des vom $k$-ten sekundärseitigen HF-Gleichrichter gleichgerichteten Stromes, welcher an seinem potentialgetrennten Gleichspannungsanschluss z.B. zur Versorgung eines anlageninternen Gleichspannungsanschlusses oder zum Laden des dort angeschlossenen ausgangsseitigen Zwischenkreiskondensators zur Verfügung steht. Zwischen den Plus- und Minusanschlüssen des $k$-ten potentialgetrennten Gleichspannungsanschlusses liegt die Spannung $U_{k,s}$ an.

∘ Jeder der m HF-Transformatoren weist eine primärseitige Wicklung, aufweisend zwei primärseitige Transformatoranschlüsse, und eine sekundärseitige Wicklung, aufweisend zwei sekundärseitige Transformatoranschlüsse, auf. Die Wicklungssinne der primär- und sekundärseitigen Wicklungen sind folgendermassen definiert: wird vom ersten zum zweiten primärseitigen Transformatoranschluss eine positive Spannung angelegt, dann resultiert auch vom ersten zum zweiten sekundärseitigen Transformatoranschluss eine positive Spannung. Für $1 \leq k \leq m$ gilt: jeder HF-Transformator realisiert ein Übersetzungsverhältnis $n_k$, welches als das Verhältnis der Anzahl Windungen der primärseitigen Wicklung zur Anzahl Windungen der sekundärseitigen Wicklung definiert ist: $n_k = N_{k,p} / N_{k,s}$. Zur Erhöhung der magnetischen Kopplung zwischen primär- und sekundärseitiger Wicklung kann jeder HF-Transformator einen Magnetkern aufweisen.

∘ Die primär- und sekundärseitigen HF-Netzwerke sind Netzwerke aufweisend passive Komponenten, z.B. Induktivitäten und/oder Kondensatoren. Jedes der primär- und sekundärseitigen HF-Netzwerke weist eine erste und eine zweite Eingangsklemme und eine erste und eine zweite Ausgangsklemme auf. Beispiele für praktisch häufig verwendete HF-Netzwerke sind:

- Jedes primärseitige HF-Netzwerk: ein Kondensator verbindet die erste Eingangsklemme mit der ersten Ausgangsklemme; die zweite Eingangsklemme ist direkt mit der zweiten Ausgangsklemme verbunden. Der Kondensator dient in einer praktischen Realisierung dazu, eventuell von den Leistungsschaltern erzeugte Gleichspannungsanteile von den angeschlossenen HF-Transformatoren fernzuhalten. Dieses HF-Netzwerk wird als HF-Kondensatornetzwerk bezeichnet.

- Jedes sekundärseitige HF-Netzwerk: ein Serienschwingkreis aus Spule und Kondensator verbindet die erste Eingangsklemme mit der ersten Ausgangsklemme; die zweite Eingangsklemme ist direkt mit der zweiten Ausgangsklemme verbunden. Der Serienschwingkreis dient der Anpassung der übertragbaren Leistung. Der Kondensator dient in der praktischen Realisierung zusätzlich dazu, eventuell von den Leistungsschaltern erzeugte Gleichspannungsanteile vom angeschlossenen HF-Transformator fernzuhalten. Dieses HF-Netzwerk wird als HF-Serienschwingkreisnetzwerk bezeichnet. Im einfachsten Fall wird die Kapazität des Kondensators des Serienschwingkreises so gross gewählt, dass dieser Kondensator nur die Gleichspannungsanteile vom angeschlossenen HF-Transformator fernhält, für die Anpassung der übertragbaren Leistung aber nicht wirksam ist. Die im Rahmen der Ausführungsbeispiele dargestellten Spannungs- und Stromverläufe gehen von diesem Fall aus.

- Die HF-Netzwerke können vollständig oder teilweise in die HF-Transformatoren integriert sein (z.B. kann die Streuinduktivität des $k$-ten HF-Transformators einen Teil oder die gesamte Induktivität der Spule des Serienschwingkreises des $k$-ten sekundärseitigen HF-Netzwerks realisieren).

HF-Wechselrichter, primärseitige HF-Netzwerke, HF-Transformatoren, sekundärseitige HF-Netzwerke und HF-Gleichrichter sind folgendermassen miteinander verbunden. Der erste primärseitige Transformatoranschluss des ersten HF-Transformators ist mit der ersten Ausgangsklemme des ersten primärseitigen HF-Netzwerks verbunden, die erste Eingangsklemme des ersten primärseitigen HF-Netzwerks ist mit dem Schaltspannungsanschluss der ersten Halbbrücke des HF-Wechselrichters verbunden, der zweite primärseitige Transformatoranschluss des ersten HF-Transformators ist mit der zweiten Ausgangsklemme des ersten primärseitigen HF-Netzwerks verbunden und die zweite Eingangsklemme des ersten primärseitigen HF-Netzwerks ist mit der ersten Eingangsklemme des zweiten primärseitigen HF-Netzwerks verbunden. Diese Art der Verbindung wird für die restlichen HF-Transformatoren und HF-Netzwerke in diesem Sinne fortgesetzt, d.h. für $1 < k \leq m$ gilt: der erste primärseitige Transformatoranschluss des $k$-ten HF-Transformators ist mit der mit der ersten Ausgangsklemme des $k$-ten primärseitigen HF-Netzwerks verbunden, die erste Eingangsklemme des $k$-ten primärseitigen HF-Netzwerks ist mit dem Schaltspannungsanschluss der $k$-ten Halbbrücke des HF-Wechselrichters verbunden und der zweite primärseitige Transformatoranschluss des $k$-ten HF-Transformators ist mit der zweiten Ausgangsklemme des $k$-ten primärseitigen HF-Netzwerks verbunden. Für $1 < k < m$ gilt: die zweite Eingangsklemme des $k$-ten primärseitigen HF-Netzwerks mit der ersten Eingangsklemme des $(k+1)$-ten primärseitigen HF-Netzwerks verbunden. Die zweite Eingangsklemme des $m$-ten primärseitigen HF-Netzwerks ist mit der ersten Eingangsklemme des ersten primärseitigen HF-Netzwerks verbunden. Für $1 \leq k \leq m$ gilt: der erste sekundärseitige Transformatoranschluss des $k$-ten HF-Transformators ist mit der ersten Eingangsklemme des $k$-ten sekundärseitigen HF-Netzwerks verbunden, der zweite sekundärseitige Transformatoranschluss des $k$-ten HF-Transformators ist mit der zweiten Eingangsklemme des $k$-ten sekundärseitigen HF-Netzwerks verbunden, die erste Ausgangsklemme des $k$-ten sekundärseitigen HF-Netzwerks ist mit dem Schaltspannungsanschluss der ersten Halbbrücke des $k$-ten HF-Gleichrichters verbunden und die zweite Ausgangsklemme des $k$-ten sekundärseitigen HF-Netzwerks ist mit dem Schaltspannungsanschluss der zweiten Halbbrücke des $k$-ten HF-Gleichrichters verbunden.

Die Regelung der an den potentialgetrennten Gleichspannungsanschlüssen abgegebenen oder aufgenommenen elektrischen Leistungen erfolgt über die geeignete Ansteuerung aller Halbbrücken. Die Ansteuerung jeder Halbbrücke erfolgt zum einen über ein Steuersignal der Halbbrücke und zum anderen über ein Aktivierungssignal der Halbbrücke. Das Steuersignal der Halbbrücke bezeichnet ein Signal zum Schalten der Spannung am Schaltspannungsanschluss der Halbbrücke. Das Steuersignal der Halbbrücke ist rechteckförmig und kann die Werte 0 oder 1 annehmen: 0 bedeutet, dass die Schalter der Halbbrücke so geschaltet sind, dass der Schaltspannungsanschluss der Halbbrücke mit dem Minusanschluss der Halbbrücke verbunden ist und 1 bedeutet, dass die Schalter der Halbbrücke so geschaltet sind, dass der Schaltspannungsanschluss der Halbbrücke mit dem Plusanschluss der Halbbrücke verbunden ist. Das Aktivierungssignal der Halbbrücke bezeichnet ein Signal zum Aktivieren der Leistungsschalter der Halbbrücke und kann die Werte 0 oder 1 annehmen: 0 bedeutet, dass, unabhängig vom Wert des Steuersignals der Halbbrücke, alle Leistungsschalter der zugeordneten Halbbrücke ausgeschaltet sind und nur die antiparallelen Dioden der Leistungsschalter wirksam sind und 1 bedeutet, dass das Steuersignal der Halbbrücke die Spannung am Schaltspannungsanschluss der Halbbrücke bestimmt.

Auf die beim Übergang des Steuersignals von 0 auf 1 und von 1 auf 0 in einer praktischen Realisierung zu berücksichtigenden Totzeiten, zur Vermeidung von Kurzschlüssen innerhalb der Halbbrücke, wird aus Gründen der Nachvollziehbarkeit der Erläuterungen nicht näher eingegangen, da davon auszugehen ist, dass die Totzeiten im Verhältnis zur Periodendauer des Steuersignals sehr kurz sind und deren Auswirkungen auf die resultierenden Spannungs- und Stromverläufe des betrachteten mehrphasigen Gleichspannungskonverters vernachlässigbar gering ausfallen.

In einer aktuellen Veröffentlichung [4] wird das Konzept des mehrphasige Gleichspannungskonverters im Rahmen der Analyse von Resonanzkonvertern mit leiterplattenintegrierten HF-Transformatoren wieder aufgegriffen. In dieser Veröffentlichung werden drei verschiedene Ausführungsformen eines dreiphasigen Resonanzkonverters dargestellt, wobei sich eine dieser Darstellungen mit dem mehrphasigen Gleichspannungskonverters mit primärseitiger Sternschaltung und $m = 3$ deckt. Da der Fokus dieser Veröffentlichung jedoch auf den leiterplattenintegrierten HF-Transformatoren liegt, ist deren Beschreibung auf $m = 3$ eingeschränkt. Auf das für die Ansteuerung der Halbbrücken verwendete Steuerverfahren wird nicht eingegangen.

**Literatur zum Stand der Technik**

[1] H. Wrede, V. Staudt, A. Steimel, «Design of an Electronic Power Transformer», 28th Annual Conference of the IEEE Industrial Electronics Society (IECON 2002), Sevilla, Spain, p. 1380-1385.

[2] H. Wrede, V. Staudt, A. Steimel, «A Soft-Switched Dual Active Bridge 3DC-to-1DC Converter employed in a High-Voltage Electronic Power Transformer», 10th European Conference on Power Electronics and Applications (EPE 2003), Toulouse, France.

[3] H. Wrede, «Beiträge zur Erhöhung von Versorgungssicherheit und Spannungsqualität in der Übertragung und Verteilung elektrischer Energie durch leistungselektronische Betriebsmittel», Dissertation, Ruhr-Universität Bochum, 2004.

[4] B. Li, Q. Li, F. C. Lee, «A WBG Based Three Phase 12.5 kW 500 kHz CLLC Resonant Converter with Integrated PCB Winding Transformer», Proc. IEEE Applied Power Electronics Conference and Exposition (APEC), San Antonio, TX, USA, 4-8 March 2018, p. 469-475.

## Darstellung der Erfindung

Eine mögliche Aufgabe der vorliegenden Erfindung ist es, einen mehrphasigen Gleichspannungskonverter zu schaffen, welcher eine umfassende Nutzung der ihm inhärenten Möglichkeiten erlaubt.

Eine weitere mögliche Aufgabe ist es, einen mehrphasigen Gleichspannungskonverter zu schaffen, der eine Verbesserung des Betriebs des betrachteten mehrphasigen Gleichspannungskonverters erreicht.

Eine weitere mögliche Aufgabe ist es, einen mehrphasigen Gleichspannungskonverter zu schaffen, der bei gleichbleibender Anzahl der zu versorgenden Gleichspannungsanschlüsse, $m$, eine Reduktion der benötigten Leistungsschalter und damit eine Reduktion des Schaltungsaufwands erreicht.

Mindestens eine dieser Aufgaben wird mindestens teilweise gelöst durch die Gegenstände gemäss den entsprechenden Patentansprüchen.

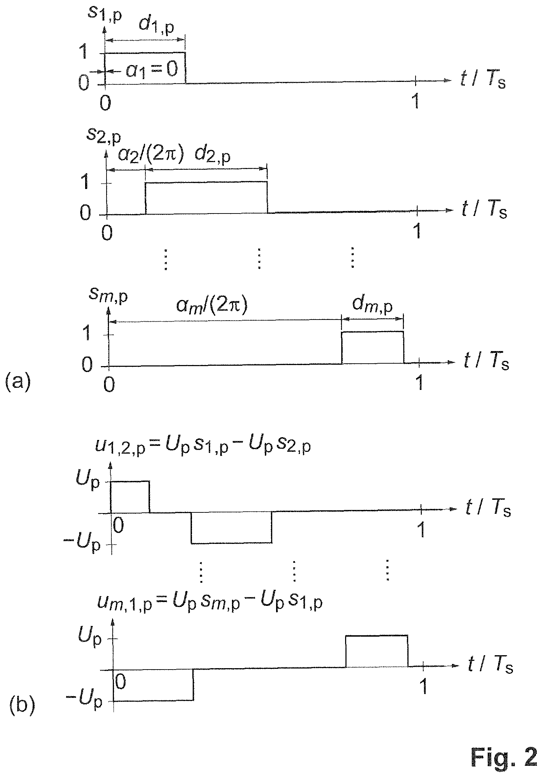

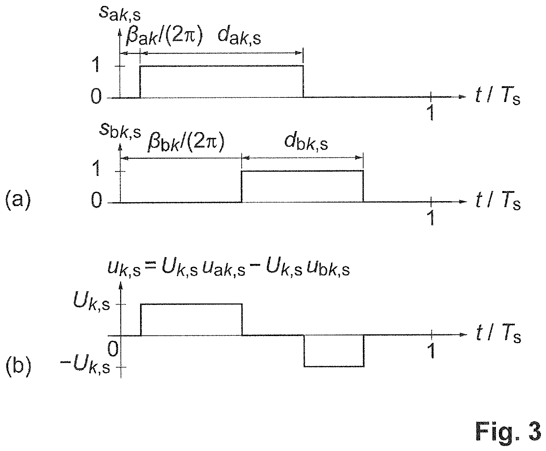

Der betrachtete mehrphasige Gleichspannungskonverter verfügt über $m$ Halbbrücken des HF-Wechselrichters und 2 $m$ Halbbrücken der HF-Gleichrichter und daher über 3 $m$ Steuersignale, wobei eine Schaltperiode die Periodendauer des Steuersignals der Halbbrücke bezeichnet und für die Steuersignale aller Halbbrücken denselben Wert hat. Insgesamt liegen für die Regelung der an den potentialgetrennten Gleichspannungsanschlüssen vorliegenden elektrischen Leistungen 9 $m$ Freiheitsgrade der Ansteuerung vor, siehe **Fig. 2** und **Fig. 3**:

- Die Schaltperiode $T_\mathrm{s}$.
- 3 $m$ Aktivierungssignale der Halbbrücken.
- 3 $m$ Tastverhältnisse der Steuersignale der Halbbrücken, wobei ein Tastverhältnis des Steuersignals die relative Dauer des Wertes 1 des Steuersignals im Verhältnis zur Dauer der Schaltperiode bezeichnet und das Tastverhältnis daher Werte zwischen 0 und 1 annehmen kann. Das Steuersignal der $k$-ten Halbbrücke des HF-Wechselrichters 1 wird mit $s_{k,\mathrm{p}}$ bezeichnet, das Steuersignal der ersten Halbbrücke 51 des $k$-ten HF-Gleichrichters 5 mit $s_{ak,\mathrm{s}}$ und das Steuersignal der zweiten Halbbrücke 52 des $k$-ten HF-Gleichrichters 5 mit $s_{bk,\mathrm{s}}$. Das Tastverhältnis des Steuersignals der $k$-ten Halbbrücke des HF-Wechselrichters 1 wird mit $d_{k,\mathrm{p}}$ bezeichnet, das Tastverhältnis des Steuersignals der ersten Halbbrücke 51 des $k$-ten HF-Gleichrichters 5 mit $d_{ak,\mathrm{s}}$ und das Tastverhältnis des Steuersignals der zweiten Halbbrücke 52 des $k$-ten HF-Gleichrichters 5 mit $d_{bk,\mathrm{s}}$.
- $m$ - 1 Phasenbeziehungen zwischen den steigenden Flanken der Steuersignale der Halbbrücken des HF-Wechselrichters. Für $1 \le k \le m$ gilt: jede Phasenbeziehung wird durch den Phasenwinkel $\alpha_k$, der zwischen der steigenden Flanke des Steuersignales der ersten Halbbrücke des HF-Wechselrichters 1 und der $k$-ten Halbbrücke des HF-Wechselrichters vorliegt, charakterisiert. Die $k$-te Halbbrücke des HF-Wechselrichters 1 wandelt das ihr zugeordnete Steuersignal $s_{k,\mathrm{p}}$ in eine zwischen dem Schaltspannungsanschluss der $k$-ten Halbbrücke des HF-Wechselrichters 1 und dem Minusanschluss der $k$-ten Halbbrücke des HF-Wechselrichters vorliegende Schaltspannung der $k$-ten Halbbrücke des HF-Wechselrichters 1 gemäss $u_{k,\mathrm{p}} = U_\mathrm{p}\, s_{k,\mathrm{p}}$ um.
- 2 $m$ Phasenbeziehungen $\beta_{ak}$ und $\beta_{bk}$ für $1 \le k \le m$: $\beta_{ak}$ bezeichnet den Phasenwinkel zwischen der steigenden Flanke des Steuersignals der ersten Halbbrücke des HF-Wechselrichters ($s_{1,\mathrm{p}}$) und der steigenden Flanke des Steuersignals der ersten Halbbrücke 51 des $k$-ten HF-Gleichrichters ($s_{ak,\mathrm{s}}$); $\beta_{bk}$ bezeichnet den Phasenwinkel zwischen der steigenden Flanke des Steuersignals $s_{1,\mathrm{p}}$ und der steigenden Flanke des Steuersignals der zweiten Halbbrücke 52 des $k$-ten HF-Gleichrichters ($s_{bk,\mathrm{s}}$). Für $1 \le k \le m$ gilt: die erste Halbbrücke 51 des $k$-ten HF-Gleichrichters 5 wandelt das ihr zugeordnete Steuersignal $s_{ak,\mathrm{s}}$ in eine zwischen den Schaltspannungs- und Minusanschlüssen der ersten Halbbrücke 51 des $k$-ten HF-Gleichrichters 5 vorliegende Schaltspannung der ersten Halbbrücke 51 des $k$-ten HF-Gleichrichters gemäss $u_{ak,\mathrm{s}} = U_{k,\mathrm{s}}\, s_{ak,\mathrm{s}}$ um und die zweite Halbbrücke 52 des $k$-ten HF-Gleichrichters 5 wandelt das ihr zugeordnete Steuersignal $s_{ak,\mathrm{s}}$ in eine zwischen den Schaltspannungs- und Minusanschlüssen der zweiten Halbbrücke 52 des $k$-ten HF-Gleichrichters 5 vorliegende Schaltspannung der zweiten Halbbrücke 52 des $k$-ten HF-Gleichrichters gemäss $u_{bk,\mathrm{s}} = U_{k,\mathrm{s}}\, s_{bk,\mathrm{s}}$ um.

Für $1 \le k \le m$ gilt: Phasenwinkel $\alpha_k > 0$, $\beta_{ak} > 0$, $\beta_{bk} > 0$ kennzeichnen ein Nacheilen des Steuersignals der betreffenden Halbbrücke in Bezug auf das Steuersignal der ersten Halbbrücke des HF-Wechselrichters. Phasenwinkel werden in Radiant angegeben.

Aufgrund der erläuterten Struktur des betrachteten mehrphasigen Gleichspannungskonverters (**Fig. 1**), liegt, für $1 \le k < m$, zwischen den ersten und zweiten Eingangsklemmen des $k$-ten primärseitigen HF-Netzwerks die Spannung $u_{k,k+1,\mathrm{p}} = u_{k,\mathrm{p}} - u_{k+1,\mathrm{p}}$ an. Zwischen der ersten und der zweiten Eingangsklemme des $m$-ten HF-Netzwerks liegt die Spannung $u_{m,1,\mathrm{p}} = u_{m,\mathrm{p}} - u_{1,\mathrm{p}}$ an. Zwischen den ersten und zweiten sekundärseitigen Ausgangsklemmen des $k$-ten HF-Netzwerks liegt die Spannung $u_{k,\mathrm{s}} = u_{ak,\mathrm{s}} - u_{bk,\mathrm{s}}$ an. Mit der Wahl der 9 $m$ Freiheitsgrade sind die zeitlichen Verläufe der Spannungen $u_{k,k+1,\mathrm{p}}$, $u_{m,1,\mathrm{p}}$ und $u_{k,\mathrm{s}}$ eingeprägt. Die zeitliche Verläufe der Spannungen $u_{k,k+1,\mathrm{p}}$, $u_{m,1,\mathrm{p}}$ und $u_{k,\mathrm{s}}$, die Realisierungen der primär- und sekundärseitigen HF-Netzwerke und die gewählten Übersetzungsverhältnisse der HF-Transformatoren bestimmen die zeitlichen Verläufe der sich in den primär- und sekundärseitigen Wicklungen der HF-Transformatoren ausbildenden Ströme und, in weiterer Folge, die an den potentialgetrennten Gleichspannungsanschlüssen abgegebenen oder aufgenommenen elektrischen Leistungen.

Bisher wurde der dieser Erfindung zugrundeliegende mehrphasige Gleichspannungskonverter in eingeschränkter Form in [1,2,3] beschrieben:

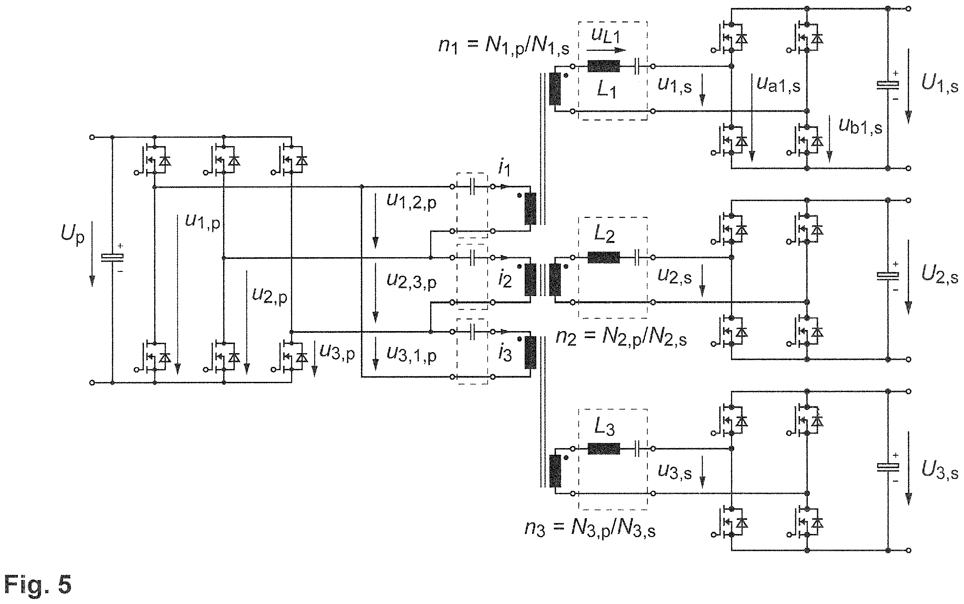

- ∘ Es wurde ausschliesslich ein dreiphasiger Gleichspannungskonverter betrachtet, wie in **Fig. 5** dargestellt. Dies entspricht der Ausführungsform des mehrphasigen Gleichspannungskonverters für $m = 3$.
- ∘ Beschreibungen zum Betrieb des dreiphasigen Gleichspannungskonverters schränken sich auf den symmetrischen Betrieb ein, d.h. es wird davon ausgegangen, dass an allen potentialgetrennten Gleichspannungsanschlüssen dieselbe elektrische Leistung vorliegt.
- ∘ In einer vertieften Untersuchung des dreiphasigen Gleichspannungskonverters in [2,3] werden die von verschiedenen Steuerverfahren zu erwartenden Verluste miteinander verglichen, wobei sich die herangezogenen Steuerverfahren jedoch bezüglich der Nutzung der vorhandenen Freiheitsgrade stark einschränken. Hinsichtlich der erzielbaren Effizienz wird in [2,3] ein vereinfachtes Steuerverfahren als am besten geeignet identifiziert, welches wie folgt charakterisiert ist:

- die Aktivierungssignale aller Halbbrücken sind 1,
- $d_{k,p} = d_{ak,s} = d_{bk,s} = 50\%$,
- $\alpha_k = k2\pi/3$,
- $\beta_{ak} = \alpha_k + \varphi/(\sqrt{2})$,
- $\beta_{bk} = \alpha_k + (2\pi/3) + [2 - \sqrt{2}]\varphi$.

Dieses Steuerverfahren gilt für alle $1 \leq k \leq m = 3$. Hiermit verbleibt ein einziger Freiheitsgrad, $\varphi$, der zur Regelung der elektrischen Leistungen verwendet wird, die an allen drei potentialgetrennten Gleichspannungsanschlüssen vorliegen.

In einem ersten Schritt kann ein Verbesserungsziel definiert werden, dies kann z.B. ein mathematisches Optimierungskriterium (z.B. die Summe aller Leitverluste sein oder die Summe aller im mehrphasigen Gleichspannungskonverter auftretenden Verluste) oder ein praktisches Ziel (Hochfahren des Konverters mit begrenztem Ausgangsstrom) sein. In einem zweiten Schritt sind die zur Erfüllung des Verbesserungsziels erforderlichen Werte für die Freiheitsgrade der Ansteuerung zu ermitteln. Dies erfolgt typisch mittels geeigneter Analyse, z.B., im Falle des Vorliegens eines mathematischen Optimierungskriteriums, ein für die Suche nach einem globalen Optimum geeigneter Optimierungsalgorithmus, welcher die Freiheitsgrade der Ansteuerung derart variiert, dass, unter Voraussetzung des stationären Betriebs in einem gegebenen Betriebspunkt, als Ergebnis der Optimierung die zur Erfüllung des Optimierungskriteriums erforderlichen Werte der Freiheitsgrade der Ansteuerung resultieren. Der Betriebspunkt ist definiert durch:

- die am nichtpotentialgetrennten Gleichspannungsanschluss anliegende Spannung,

- die an allen $m$ potentialgetrennten Gleichspannungsanschlüssen anliegenden Spannungen,

- den an allen $m$ potentialgetrennten Gleichspannungsanschlüssen zur Verfügung gestellten elektrischen Leistungen.

Der stationäre Betrieb des betrachteten mehrphasigen Gleichspannungskonverters ist gekennzeichnet durch konstante Werte aller Spannungen und Leistungen des Betriebspunkts.

Der mehrphasige, potentialgetrennte Gleichspannungskonverter dient zum Austausch elektrischer Energie zwischen einem primärseitigen Gleichspannungsanschluss und m sekundärseitigen potentialgetrennten Gleichspannungsanschlüssen. Er weist die folgenden Untereinheiten auf:

- einen HF-Wechselrichter;

- daran angeschlossen m primärseitige HF-Netzwerke;

- daran angeschlossen m primärseitige Wicklungen einer HF-Transformatoranordnung;

- sekundärseitige Wicklungen der HF-Transformatoranordnung;

- daran angeschlossen $m$ sekundärseitige HF-Netzwerke;

- daran angeschlossen $m$ HF-Gleichrichter;

und eine Steuerung der Untereinheiten, welche dazu ausgelegt ist, Steuerparameter, entsprechend Freiheitsgraden der Steuerung, zu bestimmen und im Betrieb des Gleichspannungskonverters an einen Betriebszustand des Gleichspannungskonverters anzupassen, wobei die derart im Betrieb anpassbaren Steuerparameter mindestens umfassen, für $1 \leq k \leq m$:

$d_{k,\mathrm{p}}$    Tastverhältnis des Steuersignals der $k$-ten Halbbrücke des HF-Wechselrichters;

$d_{ak,\mathrm{s}}$    Tastverhältnis des Steuersignals der ersten Halbbrücke des $k$-ten HF-Gleichrichters;

$d_{\mathrm{b}k,\mathrm{s}}$    Tastverhältnis des Steuersignals der zweiten Halbbrücke des $k$-ten HF-Gleichrichters;

$\alpha_k$    Phasenwinkel zwischen der steigenden Flanke des Steuersignales der ersten Halbbrücke des HF-Wechselrichters und der $k$-ten Halbbrücke des HF-Wechselrichters;

$\beta_{ak}$    Phasenwinkel zwischen der steigenden Flanke des Steuersignals der ersten Halbbrücke des HF-Wechselrichters ($s_{1,\mathrm{p}}$) und der steigenden Flanke des Steuersignals der ersten Halbbrücke des $k$-ten HF-Gleichrichters ($s_{ak,\mathrm{s}}$);

$\beta_{\mathrm{b}k}$    Phasenwinkel zwischen der steigenden Flanke des Steuersignals $s_{1,\mathrm{p}}$ und der steigenden Flanke des Steuersignals der zweiten Halbbrücke des $k$-ten HF-Gleichrichters ($s_{\mathrm{b}k,\mathrm{s}}$).

Zwei jeweils aneinander angeschlossene Untereinheiten erlauben einen Leistungsfluss in eine oder beide Richtungen zwischen den Untereinheiten. "Angeschlossen" bedeutet also auch "zum Austausch von Energie ausgelegt sein".

In Ausführungsformen sind die Untereinheiten jeweils auf einen bidirektionalen Leistungsfluss ausgelegt.

In Ausführungsformen umfassen die im Betrieb anpassbaren Steuerparameter zusätzlich mindestens einen der folgenden beiden Steuerparameter: $T_{\mathrm{s}}$ (Schaltperiode) und Aktivierungssignale der Halbbrücken.

In Ausführungsformen ist die Steuerung dazu ausgelegt, zur Minimierung von Leitverlusten

- in einem stationären Betrieb alle Halbbrücken mit einem Tastverhältnis von 50% zu betreiben;

- alle Halbbrücken zu aktivieren;

- die Phasenwinkel $\alpha_k,\ \beta_{ak},\ \beta_{\mathrm{b}k}$ zur mindestens annähernden Minimierung des Optimierungskriteriums

$$f = \min\left(\sum_{k=1}^{m} R_k I_{k,\mathrm{p}}^2\right)$$ zu bestimmen, wobei $I_{k,\mathrm{p}}$ den Effektivwert des Stroms in der primärseitigen Wicklung des $k$-ten HF-Transformators und $R_k$ einen entsprechenden Ersatzwiderstand repräsentiert.

In Ausführungsformen weist der Gleichspannungskonverter $m = 3$ sekundärseitige potentialgetrennte Gleichspannungsanschlüsse auf, wobei die Steuerung, bei symmetrischer Belastung der sekundärseitigen Gleichspannungsanschlüsse mit einer Leistung P, dazu ausgelegt ist,
die Phasenwinkel $\alpha_1 = 0$, $\alpha_2 = 2\pi/3$, $\alpha_3 = 4\pi/3$ zu setzen, und
erste Phasenwinkeldifferenzen $\beta_{a1} - \alpha_1 = \beta_{a2} - \alpha_2 = \beta_{a3} - \alpha_3$ zu setzen, und
zweite Phasenwinkeldifferenzen $\beta_{\mathrm{b}1} - \beta_{a1} = \beta_{\mathrm{b}2} - \beta_{a2} = \beta_{\mathrm{b}3} - \beta_{a3}$ zu setzen,
und insbesondere,
die Phasenwinkeldifferenzen in Abhängigkeit des Verhältnisses der Leistung P zu einer maximalen Leistung $Pmax$ anzupassen, indem

- für $P$ zwischen Null und $P_{max}/2$ die erste Phasenwinkeldifferenz von Null ansteigt und wieder zu Null abfällt, und die zweite Phasenwinkeldifferenz monoton von $2\pi/3$ auf $\pi$ ansteigt; und

- für $P$ zwischen $P_{max}/2$ und $P_{max}$ die erste Phasenwinkeldifferenz monoton von Null auf $\pi/3$ ansteigt, und die zweite Phasenwinkeldifferenz konstant bei $\pi$ verbleibt.

In Ausführungsformen verlaufen die Phasenwinkel und Phasenwinkeldifferenzen gemäss **Tabelle 1**.

In Ausführungsformen weist der Gleichspannungskonverter $m = 3$ sekundärseitige potentialgetrennte Gleichspannungsanschlüsse auf, wobei die Steuerung dazu ausgelegt ist, bei asymmetrischer Belastung der sekundärseitigen Gleichspannungsanschlüsse mit Leistungen $P_{1,\mathrm{s}}$, $P_{2,\mathrm{s}}$ und $P_{3,\mathrm{s}}$ sowie für verschiedene Spannungen $U_{1,\mathrm{s}}$, $U_{2,\mathrm{s}}$ und $U_{3,\mathrm{s}}$ an den sekundärseitigen Gleichspannungsanschlüssen die Phasenwinkel und die Phasenwinkeldifferenzen gemäss **Tabelle 2** anzupassen.

In Ausführungsformen ist die Steuerung dazu ausgelegt, in einem Betriebsmodus zum Hochfahren des Gleichspannungskonverters die Aktivierungssignale wie folgt zu setzen, wobei $1 \leq k \leq m$:

- Aktivierung aller Halbbrücken (11) des HF-Wechselrichters (1);
- Deaktivierung aller Halbbrücken (51, 52) der HF-Gleichrichter (5).

Es gilt also

- die Aktivierungssignale aller Halbbrücken des HF-Wechselrichters sind 1 und
- die Aktivierungssignale aller Halbbrücken der HF-Gleichrichter sind 0, d.h. alle HF-Gleichrichter werden als Diodengleichrichter betrieben und entsprechend stellen sich $\beta_{ak}$ und $\beta_{bk}$ je nach Betriebspunkt natürlich ein.

Das Steuerverfahren für das Hochfahrens des mehrphasigen Gleichspannungskonverters mit begrenztem Ausgangsstrom begründet sich darin, dass das vereinfachte Steuerverfahren und das oben beschriebene Steuerverfahren für minimale Leitverluste während des Hochfahrens des mehrphasigen Gleichspannungskonverters, aufgrund des Aufladens der an die potentialgetrennten Gleichspannungsanschlüssen angeschlossenen Zwischenkreiskondensatoren, sehr hohe Ströme in allen Leistungshalbleitern und in allen HF-Transformatoren des betrachteten mehrphasigen Gleichspannungskonverters verursachen.

In Ausführungsformen lässt sich eine gleichzeitige Reduktion der Effektivwerte der Ströme in allen Leistungshalbleitern und in allen HF-Transformatoren erreichen, wenn durch geeignete Massnahmen eine wesentliche Reduktion der Effektivwerte der zwischen den ersten und zweiten Eingangsklemmen aller primärseitigen HF-Netzwerke vorliegenden Spannungen bis hin zu Werten nahe Null erreicht wird, was sich, aufgrund der Verkettungen der zwischen den ersten und zweiten Eingangsklemmen der primärseitigen HF-Netzwerke vorliegenden Spannungen, erreichen lässt, wenn die Tastverhältnisse der Steuersignale der Halbbrücken des HF-Wechselrichters von 50% abweichen, d.h. es gilt $d_{k,p} \neq 50\%$ für $1 \leq k \leq m$.

In Ausführungsformen wird zudem die folgende technisch sinnvolle Einschränkung realisiert:

- $\sum_{k=1}^{m} d_{k,p} < 1$ oder $\sum_{k=1}^{m} d_{k,p} > m - 1$, da hiermit zusätzlich eine teilweise Entkopplung der einzelnen Phasen des mehrphasigen Gleichspannungskonverters erzielt werden kann.

In Ausführungsformen wird zudem eine Vereinfachung in der Ansteuerung, bei gleichzeitiger teilweiser Entkopplung der einzelnen Phasen des mehrphasigen Gleichspannungskonverters, mit folgender Bedingung erreicht:

- entweder $0 < d_{k,p} < 1 / m$ oder $(m - 1) / m < d_{k,p} < 1$.

In Ausführungsformen wird zudem auch gewählt: $d_{k,p} = d_{1,p}$, d.h. die Tastverhältnisse der getrennten Gleichspannungsanschlüsse sind gleich. Dies ist bei symmetrischer Last zweckmässig.

In Ausführungsformen wird jeweils zur Steuerung eines Ausgangsstroms eines $k$-ten sekundärseitigen HF-Gleichrichters das Tastverhältnis $d_{k,p}$ angepasst.

In Ausführungsformen ist die Steuerung dazu ausgelegt, bei einem Betrieb mit kleinen Leistungen die Steuerparameter wie folgt zu setzen, wobei $1 \leq k \leq m$:

- Aktivierung aller Halbbrücken des HF-Wechselrichters (1) und der HF-Gleichrichter (5), d.h. alle Aktivierungssignale sind 1;
- $d_{k,p} \neq 50\%$.

In Ausführungsformen wird zudem die folgende technisch sinnvolle Einschränkung realisiert:

- $\sum_{k=1}^{m} d_{k,p} < 1$ oder $\sum_{k=1}^{m} d_{k,p} > m - 1$, da hiermit zusätzlich eine teilweise Entkopplung der einzelnen Phasen des mehrphasigen Gleichspannungskonverters erzielt werden kann. Eine Vereinfachung in der Ansteuerung, bei gleichzeitiger teilweiser Entkopplung der einzelnen Phasen des mehrphasigen Gleichspannungskonverters, wird mit folgender Bedingung erreicht:
- entweder $0 < d_{k,p} < 1 / m$ oder $(m - 1) / m < d_{k,p} < 1$.

Zudem können, in Kombination mit einem oder mehreren der bereits genannten Zusammenhänge, einer oder mehrere der folgenden Zusammenhänge durch die Steuerung realisiert werden:

◦ $0 < d_{k,p} + d_{ak,s} < 1 / m$, d.h. in jedem Modul liegt die Summe der Tastverhältnisse der Primär- und Sekundärseite zwischen Null und $1 / m$. Diese Bedingung stellt eine Vereinfachung für die Ansteuerung dar, da hiermit verhindert wird, dass gleichzeitig eine positive Spannung zwischen der ersten und zweiten Eingangsklemme des $k$-ten primärseitigen HF-Netzwerks und eine negative Spannung zwischen der ersten und zweiten Ausgangsklemme des $k$-ten sekundärseitigen HF-Netzwerks vorliegt.

◦ $d_{k,p} = d_{1,p}$, d.h. die Tastverhältnisse der getrennten Gleichspannungsanschlüsse sind gleich. Dies ist bei symmetrischer Last zweckmässig.

In Ausführungsformen ist die Steuerung dazu ausgelegt, bei einem Betrieb mit kleinen Leistungen einen oder mehrere der weiteren Steuerparameter wie folgt zu setzen, wobei $1 \leq k \leq m$:

◦ $d_{k,p} = d_{1,p}$;
◦ $d_{ak,s} = d_{bk,s}$;
◦ $\alpha_k = (k - 1)2\pi/m$;
◦ $\beta_{bk} - \beta_{ak} = 2 \pi / m$.

In Ausführungsformen ist die Steuerung dazu ausgelegt, bei einem Betrieb mit kleinen Leistungen die Steuerparameter wie folgt gemäss einer der drei folgenden Varianten zu setzen, wobei $1 \leq k \leq m$:

erste Variante:

◦ $0 < d_{1,p} + d_{ak,s} < 1 / m$,
◦ $d_{ak,s} = d_{bk,s}$,
◦ $\beta_{bk} - \beta_{ak} = 2 \pi / m$,

zweite Variante:

◦ $0 < d_{1,p} + (\beta_{bk} - \beta_{ak}) / (2 \pi) < 1 / m$,
◦ $d_{ak,s} = d_{bk,s} = 1 / m$,

dritte Variante:

◦ $0 < d_{1,p} + (\beta_{ak} - \beta_{bk}) / (2 \pi) < 1 / m$,
◦ $d_{ak,s} = d_{bk,s} = (m - 1) / m$.

In Ausführungsformen weisen die HF-Gleichrichter jeweils eine erste Halbbrücke mit Leistungsschaltern und eine zweite Halbbrücke mit Kondensatoren auf.

Iin Ausführungsformen weist die HF-Transformatoranordnung m einzelne HF-Transformatoren auf, und bilden insbesondere primärseitige Wicklungen dieser HF-Transformatoren eine Dreieckschaltung oder eine Sternschaltung oder sind zwischen einer Stern- und Dreieckschaltung umschaltbar sind. Damit ist ein phasenmodularer Konverter realiserbar.

In Ausführungsformen weisen die HF-Transformatoren jeweils zwei Sekundärwicklungen auf, und die Sekundärwicklungen aller HF-Transformatoren bilden eine Zick-Zack-Schaltung.

In Ausführungsformen weist die HF-Transformatoranordnung einen Mehrphasen-HF-Transformator mit m Phasen auf. Damit ist ein phasenintegrierter Konverter realisierbar.

**Kurze Beschreibung der Zeichnungen**

Im Folgenden wird der Erfindungsgegenstand anhand von bevorzugten Ausführungsbeispielen, welche in den beiliegenden Zeichnungen dargestellt sind, näher erläutert. Es zeigen:

Fig. 1: Schaltbild einer Gleichspannungsversorgung mit mehreren potentialgetrennten Ausgängen.

Fig. 2: (a) Steuersignale der Halbbrücken des HF-Wechselrichters, (b) mit Fig. 2(a) korrespondierende Spannungen zwischen den Schaltspannungsanschlüssen der $k$-ten und ($k$+1)-ten Halbbrücke des HF-Wechselrichters (für $1 \leq k < m$) bzw. zwischen den Schaltspannungsanschlüssen der m-ten und ersten Halbbrücke des HF-Wechselrichters.

Fig. 3: (a) Steuersignale der Halbbrücken des $k$-ten HF-Gleichrichters, (b) mit Fig. 3(a) korrespondierende Spannung zwischen den Schaltspannungsanschlüssen der ersten und der zweiten Halbbrücke des $k$-ten HF-Gleichrichters (für $1 \leq k \leq m$).

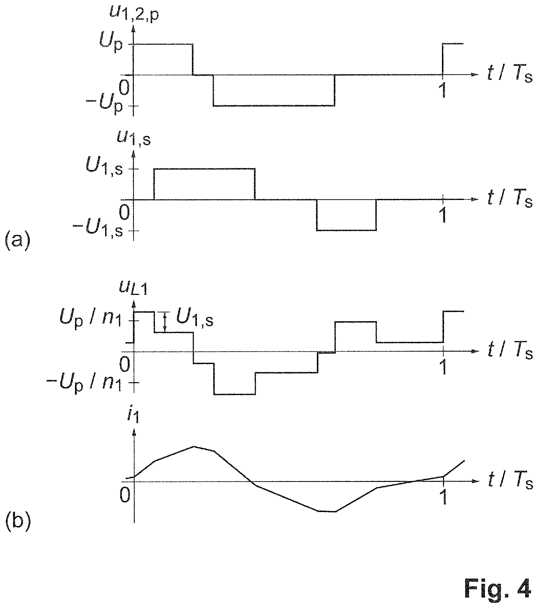

Fig. 4: Beispiel für die Ausbildung des Stroms in der sekundärseitigen Wicklung des ersten HF-Transformators, $k$ = 1: (a) zwischen den ersten und zweiten Eingangsklemmen des ersten primärseitigen HF-Netzwerks vorliegende Spannung und zwischen den ersten und zweiten Ausgangsklemmen des ersten sekundärseitigen HF-Netzwerks vorliegende Spannung; (b) mit Fig. 4(a) korrespondierende Spannungs- und Stromverläufe in der Spule des ersten sekundärseitigen HF-Netzwerks unter den Annahmen, dass die primärseitigen HF-Netzwerke durch HF-Kondensatornetzwerke und die sekundärseitigen HF-Netzwerke durch HF-Serienschwingkreisnetzwerke realisiert werden und die Kapazitäten der Kondensatoren aller HF-Netzwerke so gross gewählt werden, dass diese Kondensatoren nur die Gleichanteile von den HF-Transformatoren fernhalten.

Fig. 5: Ausführungsform einer dreiphasigen Gleichspannungsversorgung.

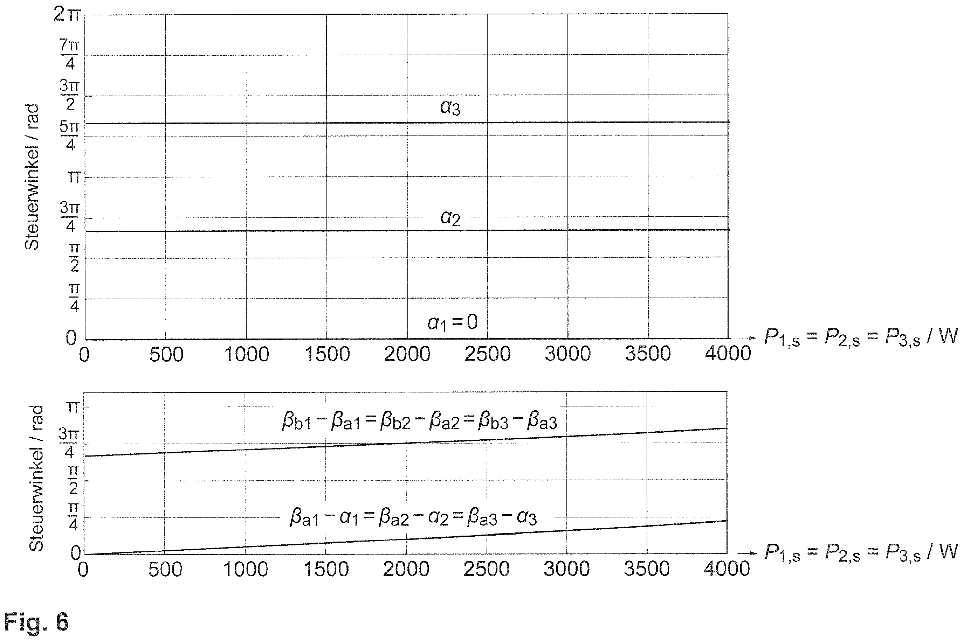

Fig. 6: Beispiel einer Steuerkennlinie bei Steuerung gemäss Wrede [2] für $m = 3$, in Abhängigkeit der an allen potentialgetrennten Gleichspannungsanschlüssen vorliegenden Leistungen $P_{1,s} = P_{2,s} = P_{3,s}$ und für symmetrischen Betrieb unter Verwendung folgender Kenndaten: $T_s = 20$ $\mu$s, $n_1 = n_2 = n_3 = 1$, $L_1 = L_2 = L_3 = 222$ $\mu$H, $U_p = 700$ V, $U_{1,s} = U_{2,s} = U_{3,s} = 700$ V.

Fig. 7: Mit dem Steuerverfahren für minimale Leitverluste des mehrphasigen Gleichspannungskonverters ermittelte Steuerkennlinien für $m = 3$ und $U_p = n_k U_k$, in Abhängigkeit der an allen potentialgetrennten Gleichspannungsanschlüssen vorliegenden und auf die maximal konvertierbare Leistung bezogene Leistung, $P/P_{max}$, für $P_{max} = 0.112$ $T_s U_p^2/L$ und $n_1^2 L_1 = n_2^2 L_2 = n_3^2 L_3 = L$.

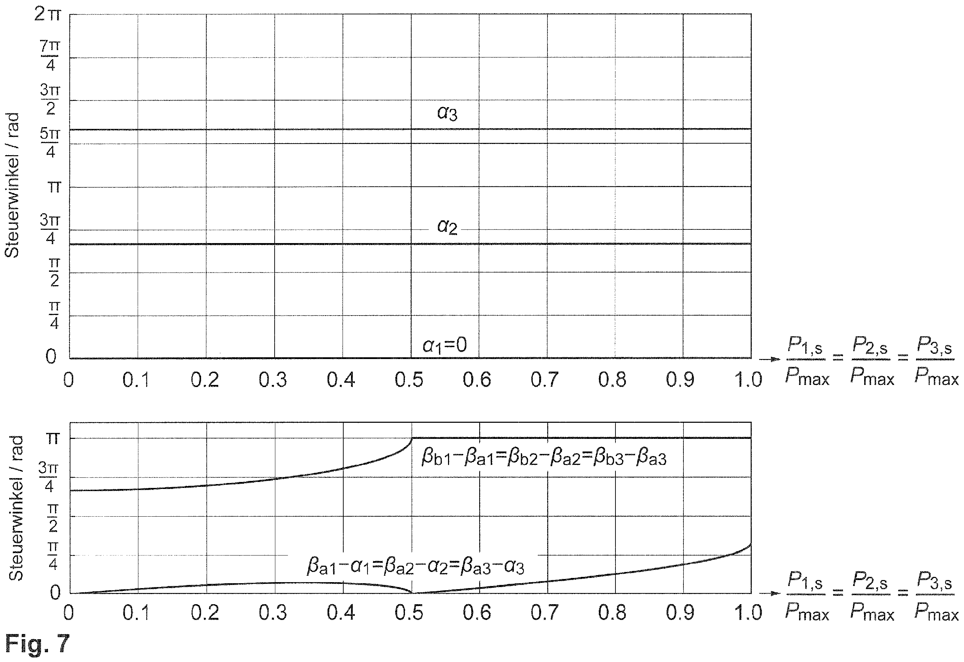

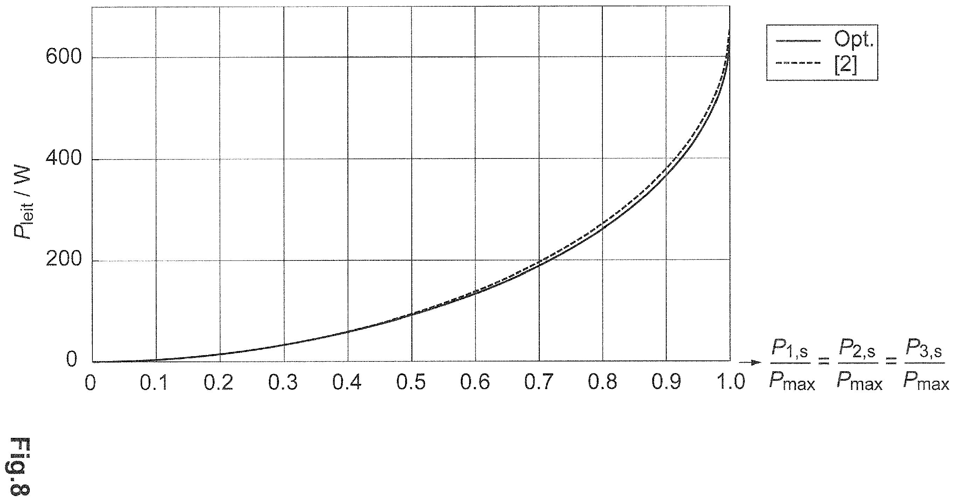

Fig. 8: Vergleich der mit dem vereinfachten Steuerverfahren nach [2] resultierenden Leitverluste (gestrichelt eingezeichnet) zu den Leitverlusten, die mit dem Steuerverfahren für minimale Leitverluste des mehrphasigen Gleichspannungskonverters resultieren (durchgezogen eingezeichnet), für die in Fig. 7 dargestellten Steuerkennlinien: $m$ = 3 und $U_p = n_k U_k$, in Abhängigkeit der an allen potentialgetrennten Gleichspannungsanschlüssen vorliegenden und auf die maximal konvertierbare Leistung bezogene Leistung, $P/P_{max}$, für $P_{max} = 0.112$ $T_s U_p^2/L$ und $n_1^2 L_1 = n_2^2 L_2 = n_3^2 L_3 = L$.

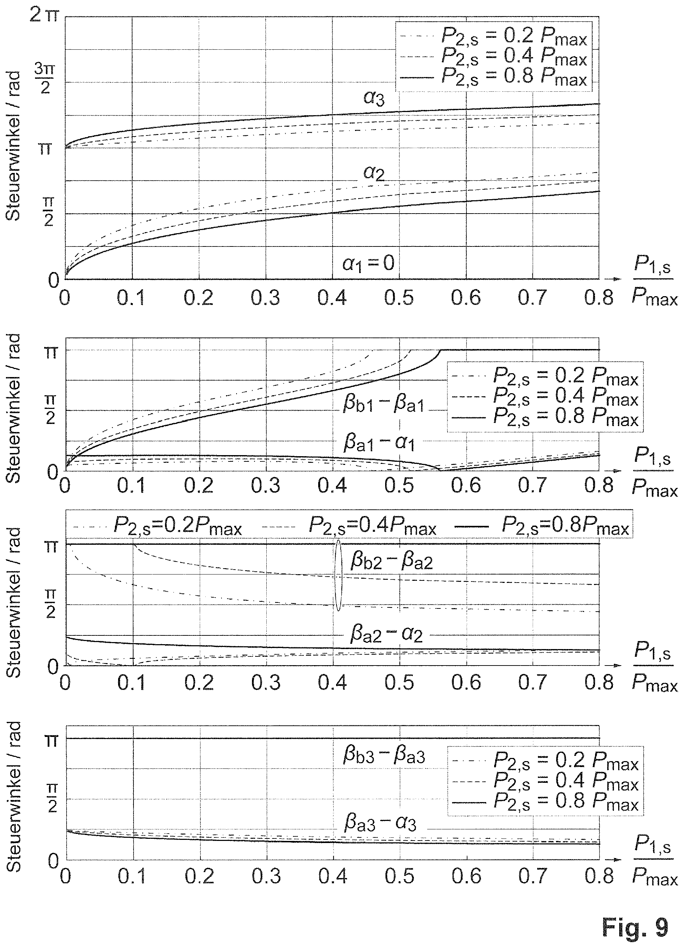

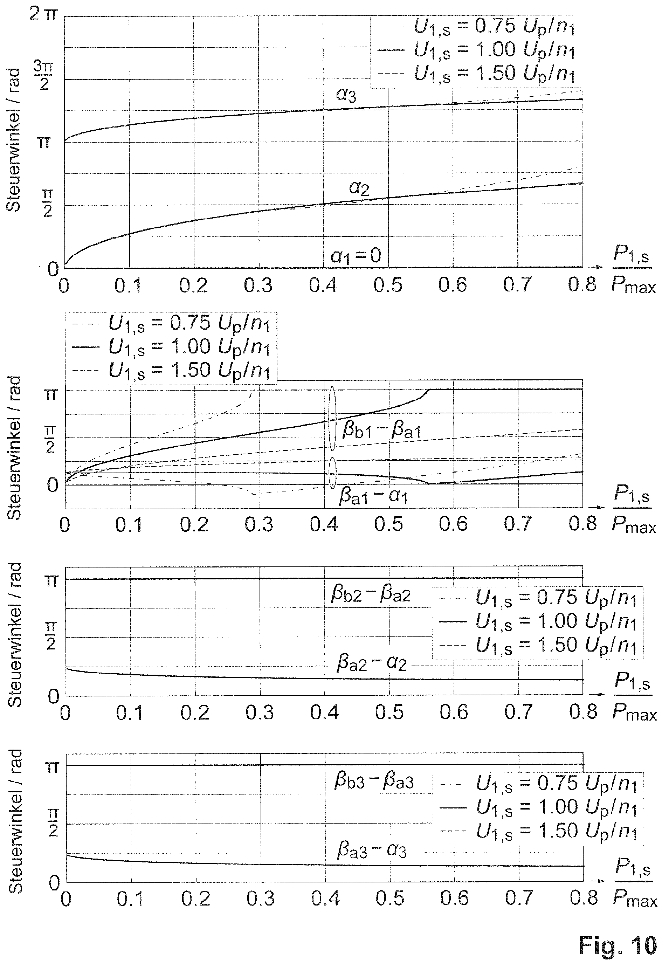

Fig. 9: Mit dem Steuerverfahren für minimale Leitverluste des mehrphasigen Gleichspannungskonverters ermittelte Steuerkennlinien für $m = 3$, in Abhängigkeit der am ersten potentialgetrennten Gleichspannungsanschluss vorliegenden Leistung $P_{1,s}$, $0 \leq P_{1,s} \leq 0.8 P_{max}$, für drei verschiedene, am zweiten potentialgetrennten Gleichspannungsanschlüssen vorliegende Leistungen $P_{2,s}$, $P_{2,s}/P_{max} = \{0.2, 0.4, 0.8\}$, und unter Verwendung folgender Kenndaten: $n_1 U_{1,s} / U_p = n_2 U_{2,s} / U_p = n_3 U_{3,s} / U_p = 1.0$, $P_{3,s}/P_{max} = 0.8$, $P_{max} = 0.112$ $T_s U_p^2/L$ und $n_1^2 L_1 = n_2^2 L_2 = n_3^2 L_3 = L$. Fig. 10: Mit dem Steuerverfahren für minimale Leitverluste des mehrphasigen Gleichspannungskonverters ermittelte Steuerkennlinien für $m = 3$, in Abhängigkeit der am ersten potentialgetrennten Gleichspannungsanschluss vorliegenden Leistung $P_{1,s}$, $0 \leq P_{1,s} \leq 0.8 P_{max}$, für drei verschiedene, am ersten potentialgetrennten Gleichspannungsanschluss anliegende Gleichspannungen $U_{1,s}$, $n_1 U_{1,s} / U_p = \{0.75, 1.0, 1.5\}$, und unter Verwendung folgender Kenndaten: $n_1 U_{1,s} / U_p = n_2 U_{2,s} / U_p = n_3 U_{3,s} / U_p = 1.0$, $P_{3,s}/P_{max} = 0.8$, $P_{max} = 0.112$ $T_s Up^2/L$ und $n1^2 L_1 = n_2^2 L_2 = n_3^2 L_3 = L$.

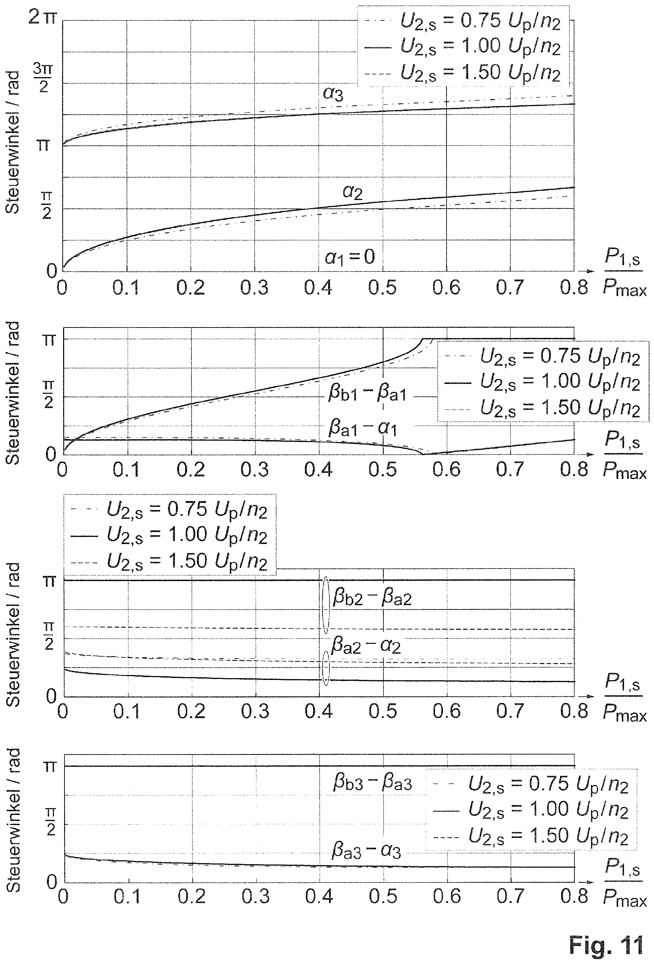

Fig. 11: Mit dem Steuerverfahrens für minimale Leitverluste des mehrphasigen Gleichspannungskonverters ermittelte Steuerkennlinien für $m = 3$, in Abhängigkeit der am ersten potentialgetrennten Gleichspannungsanschluss vorliegenden Leistung $P_{1,s}$, $0 \leq P_{1,s} \leq 0.8 P_{max}$, für drei verschiedene, am zweiten potentialgetrennten Gleichspannungsanschluss anliegende Gleichspannungen $U_{2,s}$, $n_2 U_{2,s} U_p = \{0.75, 1.0, 1.5\}$, und unter Verwendung folgender Kenndaten: $n_1 U_{1,s} / U_p = n_2 U_{2,s} / U_p = n_3 U_{3,s} / U_p = 1.0$, $P_{3,s}/P_{max} = 0.8$, $P_{max} = 0.112$ $T_s U_p^2/L$ und $n_1^2 L_1 = n_2^2 L_2 = n_3^2 L_3 = L$.

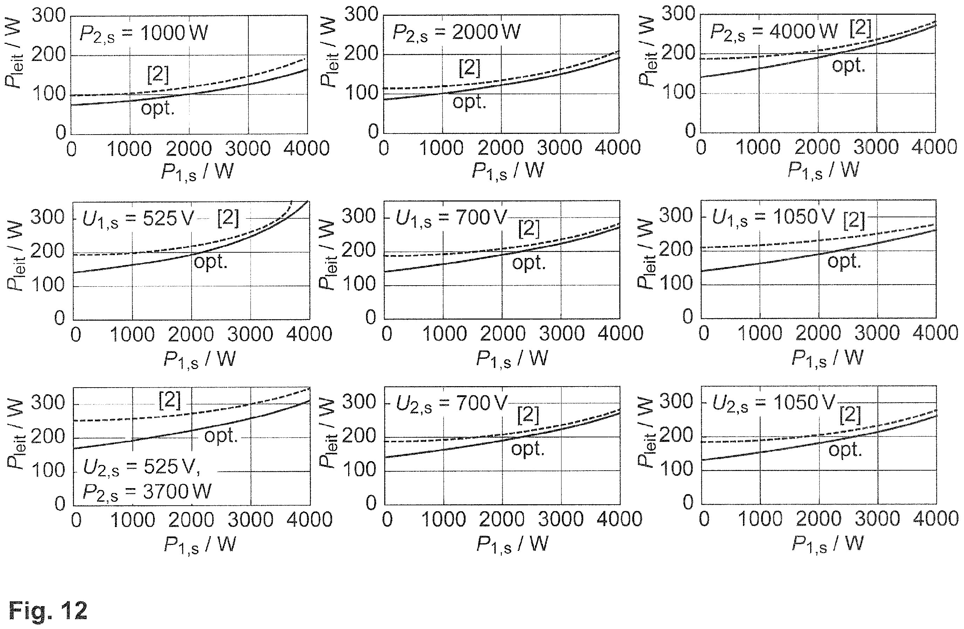

Fig. 12: Vergleich der mit dem vereinfachten Steuerverfahren nach [2] resultierenden Leitverluste (gestrichelt eingezeichnet) zu den Leitverlusten, die mit dem Steuerverfahren für minimale Leitverluste des mehrphasigen Gleichspannungskonverters resultieren (durchgezogen eingezeichnet), d.h. für die in Figuren 7, 8 und 9 dargestellten Steuerkennlinien: $m = 3$, in Abhängigkeit der am ersten potentialgetrennten Gleichspannungsanschluss vorliegenden Leistung $P_{1,s}$ und, sofern in der Abbildung nicht abweichend angegeben, unter Verwendung folgender Kenndaten: $T_s = 20$ $\mu$s, $n_1 = n_2 = n_3 = 1$, $L_1 = L_2 = L_3 = 222$ $\mu$H, $U_p = 700$ V, $U_{1,s} = U_{2,s} = U_{3,s} = 700$ V, $P_{2,s} = P_{3,s} = 4$ kW (Anmerkung: für $U_{k,s} = 525$ V lässt das vereinfachten Steuerverfahren keine höhere Leistung als $P_{k,s} = 3.7$ kW, $k = \{1,2,3\}$, zu). Für die betrachteten Beispiele liegt die erzielte Verbesserung typisch im Bereich zwischen 5% und 20%.

Fig. 13: (a) Simulierte Spannungs- und Stromverläufe mit dem vereinfachten Steuerverfahren und (b) dem Steuerverfahren für minimale Leitverluste des mehrphasigen Gleichspannungskonverters.

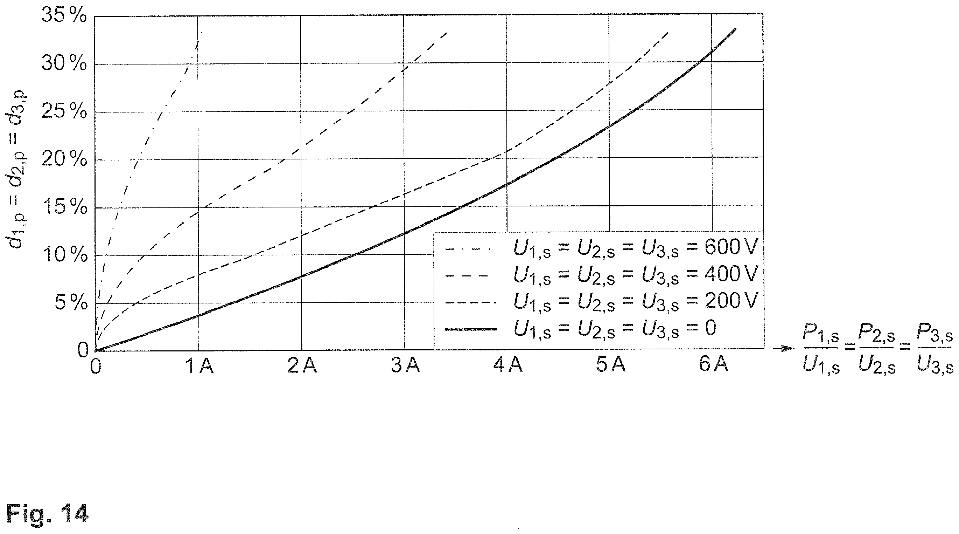

Fig. 14: Mit dem Steuerverfahren für das Hochfahren des mehrphasigen Gleichspannungskonverters mit begrenztem Ausgangsstrom ermittelte Steuerkennlinien für m = 3, $U_\mathrm{p}$ = 700 V und verschiedenen Ausgangsspannungen ($U_{1,\mathrm{s}}$ = $U_{2,\mathrm{s}}$ = $U_{3,\mathrm{s}}$ = {0, 200 V, 400 V, 600 V}). Dargestellt sind die Verläufe der Tastverhältnisse $d_{1,\mathrm{p}}$ = $d_{2,\mathrm{p}}$ = $d_{3,\mathrm{p}}$ in Abhängigkeit des Ausgangsstroms des ersten, des zweiten und des dritten HF-Gleichrichters. Gewählte Kenndaten: $n_1 = n_2 = n_3 = 1$, $L_1 = L_2 = L_3 = 222\ \mu\mathrm{H}$, $T_\mathrm{s} = 20\ \mu\mathrm{s}$.

Fig. 15: Simulierte Spannungs- und Stromverläufe, die mit dem Steuerverfahren für das Hochfahren des mehrphasigen Gleichspannungskonverters mit begrenztem Ausgangsstrom während des Hochstartvorgangs.

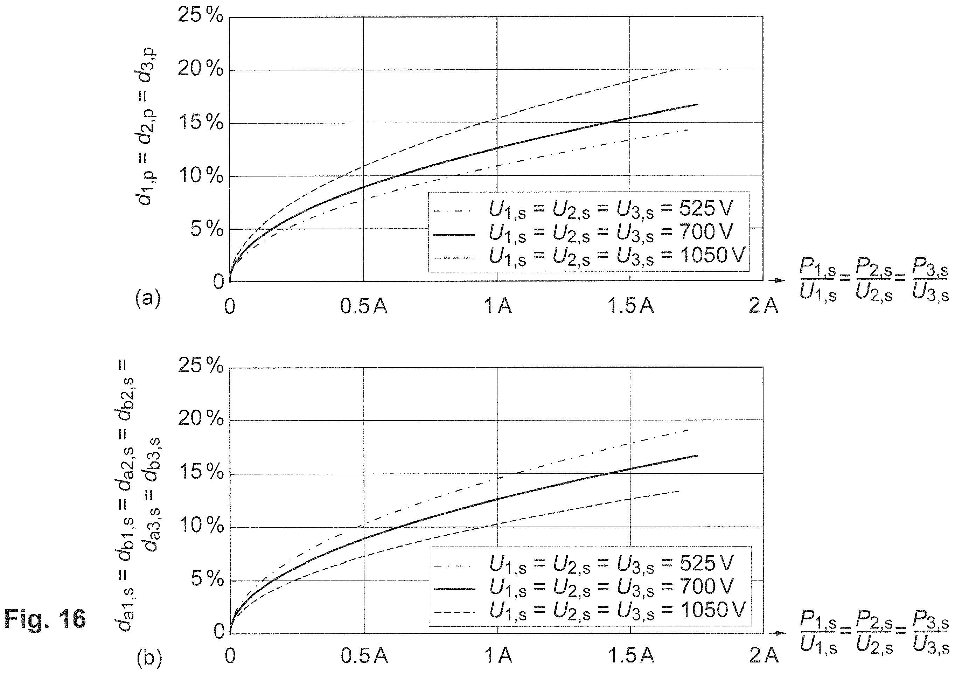

Fig. 16: Steuerkennlinien für den Betrieb mit geringen Leistungen an allen potentialgetrennten Gleichspannungsanschlüssen des mehrphasigen Gleichspannungskonverters für $m = 3$, $U_\mathrm{p}$ = 700 V und verschiedenen Spannungen an den potentialgetrennten Gleichspannungsanschlüssen: $U_{1,\mathrm{s}}$ = $U_{2,\mathrm{s}}$ = $U_{3,\mathrm{s}}$ = {525 V (strich-punktiert), 700 V (durchgezogen), 1050 V (strichliert)}. Dargestellt sind in (a) die Verläufe der Tastverhältnisse $d_{1,\mathrm{p}}$ = $d_{2,\mathrm{p}}$ = $d_{3,\mathrm{p}}$ und in (b) die Verläufe der Tastverhältnisse $d_{a1,\mathrm{s}}$ = $d_{b1,\mathrm{s}}$ = $d_{a2,\mathrm{s}}$ = $d_{b2,\mathrm{s}}$ = $d_{a3,\mathrm{s}}$ = $d_{b3,\mathrm{s}}$ in Abhängigkeit des Ausgangsstroms des ersten, des zweiten und des dritten HF-Gleichrichters.; ausserdem gilt $\alpha_k = (k - 1)\, 2\,\pi\,/\,3$, $\beta_{ak} = \alpha_k + 2\,\pi\,d_{k,\mathrm{p}}$ und $\beta_{bk} - \beta_{ak} = 2\,\pi\,/\,3$ für alle $1 \le k \le m$. Gewählte Kenndaten: $n_1 = n_2 = n_3 = 1$, $L_1 = L_2 = L_3 = 222\ \mu\mathrm{H}$, $T_\mathrm{s} = 20\ \mu\mathrm{s}$.

Fig. 17: Simulierte Spannungs- und Stromverläufe für den Betrieb mit geringen Leistungen an allen potentialgetrennten Gleichspannungsanschlüssen des mehrphasigen Gleichspannungskonverters.

Fig. 18: Mehrphasiger Gleichspannungshalbbrückenkonverter.

Fig. 19: Ausführung als mehrphasiger Gleichspannungshalbbrückenkonverter mit primärseitiger Sternschaltung.

Fig. 20: Ausführung als mehrphasiger Gleichspannungshalbbrückenkonverter mit primärseitiger Sternschaltung und sekundärseitiger Zick-Zack-Schaltung.

Fig. 21: Ausführung als mehrphasiger umschaltbarer Gleichspannungshalbbrückenkonverter.

Fig. 22: Schaltungsvariante mit einem Mehrphasen-HF-Transformator.

## Wege zur Ausführung der Erfindung

Im Folgenden werden drei als Beispiele erläuterte Ausführungsformen des Steuerverfahrens vorgestellt, entprechend unterschiedlichen Betriebsarten des Gleichspannungskonverters. Die erste Ausführungform des Steuerverfahrens realisiert minimale Leitverluste des mehrphasigen Gleichspannungskonverters, die zweite Ausführungsform des Steuerverfahrens ermöglicht das Hochfahren des mehrphasigen Gleichspannungskonverters mit begrenztem Ausgangsstrom und die dritte Ausführungsform einen Betrieb mit geringen Leistungen an den potentialgetrennten Gleichspannungsanschlüssen des mehrphasigen Gleichspannungskonverters.

Grundsätzlich gilt für die Funktionsweise des Konverters, dass er gesteuert und auch geregelt werden kann, indem Spannungen von externen oder internen Quellen, typischerweise Kapazitäten, an die Induktivitäten geschaltet werden. Es ergeben sich Spannungsdifferenzen, welche die Ströme in den Induktivitäten treiben. Die Ströme wiederum können die Spannungen von Kapazitäten verändern oder in einen Eingang oder Ausgang fliessen.

Dem entsprechend kann eine Regelung, ausgehend von gewünschten Ausgangsspannungen und tatsächlich vorliegenden Spannungen an Ausgangskapazitäten jeweils Ströme zur Korrektur dieser Spannungen bestimmen, und daraus wiederum Spannungen, die an die Induktivitäten geschaltet werden müssen, um diese Ströme zu erzeugen. Durch Spannungen und Ströme an einem Eingang respektive Ausgang ergibt sich die dort übertragene Leistung. Eine im Betrieb des Konverters auftretende Spannung oder Leistung an einem Ausgang oder Eingang kann bezüglich auf eine entsprechende maximale Spannung oder Leistung bezogen werden.

Das Steuerverfahren wird typischerweise mittels einer Steuereinheit realisiert, wobei das Steuerverfahren fest implementiert ist oder durch einen programmgesteuerten Mikroprozessor ausgeführt wird. Eingangsgrössen für das Steuerverfahren stammen insbesondere aus Spannungsmessungen und Strommessungen, Ausgangsgrössen sind Schaltsignale für die Schalter.

Die Steuereinheit kann dazu eingerichtet sein, zwei oder mehr der anschliessend vorgestellten Betriebsarten des Gleichspannungskonverters zu realisieren und zwischen diesen umzuschalten.

**Die Ausführungsform des Steuerverfahrens für minimale Leitverluste des mehrphasigen Gleichspannungskonverters** verwendet, aus technischen Gründen, Tastverhältnisse von 50%, konstante Schaltperioden und dauernd aktivierte Halbbrücken:

1. Im stationären Betrieb werden alle Halbbrücken mit einem Tastverhältnis von 50% betrieben, d.h. $d_{k,\mathrm{p}} = d_{ak,\mathrm{s}} = d_{bk,\mathrm{s}} = 50\%$ für $1 \le k \le m$. Dies gewährleistet halbwellensymmetrische und daher mittelwertfreie Verläufe der an den primär- und sekundärseitigen Transformatoranschlüssen anliegenden Spannungen und dient der Vermeidung einer andernfalls eventuell möglichen Sättigung der Magnetkerne der HF-Transformatoren.

2. Es wird eine konstante Schaltperiode angenommen, zur Vermeidung hoher Schaltverluste, für den Fall, dass die hier erläuterte Ausführungsform des Steuerverfahrens niedrige Werte der Schaltperiode ermitteln würde, und zur Vermeidung einer Sättigung der Magnetkerne der HF-Transformatoren, für den Fall, dass die hier erläuterte Ausführungsform des Steuerverfahrens hohe Werte der Schaltperiode ermitteln würde, da das Optimierungskriterium, welches in der hier erläuterten Ausführungsform des Steuerverfahrens verwendet wird, weder Schaltverluste noch Sättigung der Magnetkerne der HF-Transformatoren mit einbezieht.

3. Die Aktivierungssignale aller Halbbrücken sind 1, zur Gewährleistung des bidirektionalen Leistungsbetriebs, d.h. Speisen und Rückspeisen elektrischer Energie, an allen $m$ potentialgetrennten Gleichspannungsanschlüssen.

Das Optimierungskriterium des Steuerverfahrens für minimale Leitverluste lautet:

$$f = \min\left(\sum_{k=1}^{m} R_k I_{k,\mathrm{p}}^2\right),$$

wobei $I_{k,\mathrm{p}}$ den Effektivwert des Stroms in der primärseitigen Wicklung des $k$-ten HF-Transformators und $R_k$ einen Ersatzwiderstand repräsentiert, zur Berechnung der Leitverluste in dem Teil des mehrphasigen Gleichspannungskonverters, der dem $k$-ten HF-Transformator zuzuordnen ist.

Zur Optimierung kann in an sich bekannter Weise eine Simulation des Verhaltens des Konverters durchgeführt werden. Dabei können bestimmte Steuerparameter fest vorgegeben werden und andere im Rahmen der Optimierung variiert werden. In der Simulation werden beispielsweise Spannungen, Ströme und Leistungen berechnet, und daraus eine Zielfunktion, die als Optimierungskriterium dient.

Die sich damit ergebenden Steuerkennlinien des Steuerverfahrens für minimale Leitverluste des mehrphasigen Gleichspannungskonverters umfassen die Werte der für dessen Optimierung verfügbaren Freiheitsgrade, d.h. die Werte von $\alpha_k$, $\beta_{ak}$ und $\beta_{bk}$ für $1 \le k \le m$, in Abhängigkeit des Betriebspunkts. Für die Ermittlung der optimalen Werte für $\alpha_k$, $\beta_{ak}$ und $\beta_{bk}$, $1 \le k \le m$, lassen sich keine geschlossenen Lösungen bzw. Gleichungen finden, daher wird auf numerische Lösungsmethoden zurückgegriffen. Für die praktische Realisierung werden, aus technischen Gründen, bevorzugt Lookup-Tabellen verwendet, d.h. für verschiedene, innerhalb des Betriebsbereichs des Gleichspannungskonverters technisch sinnvoll verteilte Betriebspunkte werden die optimierten Werte für $\alpha_k$, $\beta_{ak}$ und $\beta_{bk}$, $1 \le k \le m$, im Vorhinein berechnet, in den Lookup-Tabellen abgespeichert und vom steuernden bzw. regelnden System des mehrphasigen Gleichspannungskonverters mittels Interpolation für den aktuell vorliegenden Betriebspunkt approximiert und angewendet.

Die Anzahl der erforderlichen Lookup-Tabellen beträgt 3m (für $\alpha_k$, $\beta_{ak}$ und $\beta_{bk}$, $1 \le k \le m$) und die Dimension jeder Lookup-Tabelle beträgt 2m+1 (aufgrund der Definition des Betriebspunkts durch $U_{\mathrm{p}}$, $U_{k,\mathrm{s}}$, $P_{k,\mathrm{s}}$), d.h. bereits für die Ausführungsform des dreiphasigen Gleichspannungskonverters, m = 3, und 10 Stützstellen pro Dimension jeder Lookup-Tabelle fallen insgesamt 90 Millionen Werte an ($9{\cdot}10^7$). Aufgrund der heutzutage verfügbaren Speicherbausteine stellt dies kein technisches Hindernis für eine praktische Realisierung dar, jedoch wird es als sinnvoll erachtet, für die detaillierte Charakterisierung der Ergebnisse für $\alpha_k$, $\beta_{ak}$ und $\beta_{bk}$, $1 \le k \le m$, eine typische Ausführung und einen typischen Betriebsfall zu wählen. Es sind dies die Ausführung und der Betriebsfall, welche in bisherigen Veröffentlichungen im Rahmen von Untersuchungen des mehrphasigen Gleichspannungskonverters mit vereinfachten Steuerverfahren betrachtet wurden:

- $m = 3$,
- die primärseitigen HF-Netzwerke werden durch HF-Kondensatornetzwerke und die sekundärseitigen HF-Netzwerke durch HF-Serienschwingkreisnetzwerke realisiert, wobei die Induktivität des $k$-ten HF-Serienschwingkreisnetzwerks mit $L_k$ bezeichnet wird ($1 \le k \le m$) und die Kapazitäten der Kondensatoren aller HF-Netzwerke so gross gewählt werden, dass diese Kondensatoren nur die Gleichanteile von den HF-Transformatoren fernhalten, aber keine nennenswerten Einflüsse auf die Stromverläufe in den Wicklungen der HF-Transformatoren haben,

- $n_k{}^2 L_k = L$ für $1 \le k \le m$,
- $U_\text{p} = n_k U_{k,\text{s}}$ und $P_{k,\text{s}} = P$, für $1 \le k \le m$ und $0 \le P \le P_\text{max}$ mit $P_\text{max} = 0.112\, T_\text{s}\, U_\text{p}{}^2/L$.

**Fig. 7** stellt die mittels Optimierungsrechnung ermittelten Ergebnisse für die oben genannte Ausführung und den oben genannten Betriebsfall dar (es gilt $\alpha_1 = 0$ und $1 \le k \le$ m), die in folgender Tabelle aufgeführt sind:

**Tabelle 1**

| $P/P_\text{max}$ | $\alpha_2$ | $\alpha_3$ | $\beta_{\text{a}k} - \alpha_k$ | $\beta_{\text{b}k} - \beta_{\text{a}k}$ |
|---|---|---|---|---|
| 0.00 | $2\pi/3$ | $4\pi/3$ | 0.0 | $2\pi/3$ |
| 0.05 | $2\pi/3$ | $4\pi/3$ | 0.056 | 2.10 |
| 0.10 | $2\pi/3$ | $4\pi/3$ | 0.103 | 2.12 |
| 0.15 | $2\pi/3$ | $4\pi/3$ | 0.145 | 2.15 |
| 0.20 | $2\pi/3$ | $4\pi/3$ | 0.180 | 2.19 |
| 0.25 | $2\pi/3$ | $4\pi/3$ | 0.205 | 2.25 |
| 0.30 | $2\pi/3$ | $4\pi/3$ | 0.221 | 2.32 |
| 0.35 | $2\pi/3$ | $4\pi/3$ | 0.226 | 2.41 |
| 0.40 | $2\pi/3$ | $4\pi/3$ | 0.214 | 2.53 |
| 0.45 | $2\pi/3$ | $4\pi/3$ | 0.175 | 2.70 |
| 0.50 | $2\pi/3$ | $4\pi/3$ | 0.0 | $\pi$ |
| 0.55 | $2\pi/3$ | $4\pi/3$ | 0.058 | $\pi$ |
| 0.60 | $2\pi/3$ | $4\pi/3$ | 0.120 | $\pi$ |
| 0.65 | $2\pi/3$ | $4\pi/3$ | 0.185 | $\pi$ |
| 0.70 | $2\pi/3$ | $4\pi/3$ | 0.251 | $\pi$ |
| 0.75 | $2\pi/3$ | $4\pi/3$ | 0.325 | $\pi$ |
| 0.80 | $2\pi/3$ | $4\pi/3$ | 0.405 | $\pi$ |
| 0.85 | $2\pi/3$ | $4\pi/3$ | 0.492 | $\pi$ |
| 0.90 | $2\pi/3$ | $4\pi/3$ | 0.597 | $\pi$ |
| 0.95 | $2\pi/3$ | $4\pi/3$ | 0.733 | $\pi$ |
| 1.00 | $2\pi/3$ | $4\pi/3$ | $\pi/3$ | $\pi$ |

**Fig. 8** stellt die für das vorbekannte vereinfachte Steuerverfahren resultierenden Leitverluste den Leitverlusten gegenüber, die mit dem optimierten Steuerverfahren für minimale Leitverluste für einen mehrphasigen Gleichspannungskonverter mit m = 3 und für $U_\text{p} = n_k U_{k,\text{s}}$ und $P_{k,\text{s}} = P$, für $1 \le k \le m$ und $0 \le P/P_\text{max} \le 1$, unter Verwendung folgender Kenndaten, resultieren: $T_\text{s} = 20\ \mu\text{s}$, $n_1 = n_2 = n_3 = 1$, $L_1 = L_2 = L_3 = 222\ \mu\text{H}$, $R_1 = R_2 = R_3 = 1.5\ \Omega$, $U_\text{p} = 700$ V, $U_{1,\text{s}} = U_{2,\text{s}} = U_{3,\text{s}} = 700$ V. Es liegt immer eine Reduktion der Leitverluste vor, für $P > P_\text{max}/2$ liegt die erzielte Verbesserung im Bereich zwischen 3% und 5%.

**Figuren 9, 10** und **11** stellen beispielhaft weitere mittels Optimierungsrechnung ermittelten Ergebnisse der Steuerkennlinien des Steuerverfahrens für minimale Leitverluste des mehrphasigen Gleichspannungskonverters mit *m* = 3 für die unten aufgezählten Betriebspunkte dar, unter den Annahmen, dass die primärseitigen HF-Netzwerke durch HF-Kondensatornetzwerke und die sekundärseitigen HF-Netzwerke durch HF-Serienschwingkreisnetzwerke realisiert werden, dass die Induktivität des *k*-ten HF-Serienschwingkreisnetzwerks mit $L_k$ bezeichnet ($1 \le k \le m$) wird und dass die Kapazitäten der Kondensatoren aller HF-Netzwerke so gross gewählt werden, dass diese Kondensatoren nur die Gleichanteile von den HF-Transformatoren fernhalten, aber keine nennenswerten Einflüsse auf die Stromverläufe in den Wicklungen der HF-Transformatoren haben:

- **Fig. 9**:

$$n_1\, U_{1,s}\, /\, U_p = n_2\, U_{2,s}\, /\, U_p = n_3\, U_{3,s}\, /\, U_p = 1.0,$$

$$0 \leq P_{1,s} \leq 0.8\, P_{max},\ P_{2,s}/P_{max} = \{0.2,\ 0.4,\ 0.8\}\ \text{und}\ P_{3,s}/P_{max} = 0.8.$$

- **Fig. 10**:

$$n_1\, U_{1,s}\, /\, U_p = \{0.75,\ 1.0,\ 1.5\},\ n_2\, U_{2,s}\, /\, U_p = n_3\, U_{3,s}\, /\, U_p = 1.0,$$

$$0 \leq P_{1,s} \leq 0.8\, P_{max},\ P_{2,s}/P_{max} = P_{3,s}/P_{max} = 0.8.$$

- **Fig. 11**:

$$n_2\, U_{2,s}\, /\, U_p = \{0.75,\ 1.0,\ 1.5\},\ n_1\, U_{1,s}\, /\, U_p = n_3\, U_{3,s}\, /\, U_p = 1.0,$$

$$0 \leq P_{1,s} \leq 0.8\, P_{max},\ P_{2,s}/P_{max} = P_{3,s}/P_{max} = 0.8.$$

**Tabelle 2:**

| $P_1/P_{max0}$ | $P_2/P_{maX0}$ | $n_1U_{1.s}/U_p$ | $n_2U_{2.s}/U_p$ | $\alpha_2$ | $\alpha_3$ | $\beta_{a1}-\alpha_1$ | $\beta_{b1}-\beta_{a1}$ | $\beta_{a2}-\alpha_2$ | $\beta_{b2}-\beta_{a2}$ | $\beta_{a3}-\alpha_3$ | $\beta_{b3}-\beta_{a3}$ |
|---|---|---|---|---|---|---|---|---|---|---|---|
| $P_3/P_{max} = 0.8$ und $n_3U_{3,s}/U_p = 1.0$ |
| 0.00 | 0.2 | 1.0 | 1.0 | 0.156 | 3.146 | 0.128 | 0.157 | 0.099 | 3.142 | 0.763 | 3.142 |
| 0.05 | 0.2 | 1.0 | 1.0 | 0.958 | 3.229 | 0.190 | 0.980 | 0.158 | 2.371 | 0.723 | 3.142 |
| 0.10 | 0.2 | 1.0 | 1.0 | 1.290 | 3.282 | 0.214 | 1.333 | 0.193 | 2.088 | 0.697 | 3.142 |
| 0.15 | 0.2 | 1.0 | 1.0 | 1.516 | 3.332 | 0.232 | 1.588 | 0.221 | 1.917 | 0.675 | 3.142 |
| 0.20 | 0.2 | 1.0 | 1.0 | 1.689 | 3.379 | 0.246 | 1.798 | 0.246 | 1.798 | 0.654 | 3.142 |
| 0.25 | 0.2 | 1.0 | 1.0 | 1.830 | 3.423 | 0.253 | 1.988 | 0.268 | 1.711 | 0.634 | 3.142 |
| 0.30 | 0.2 | 1.0 | 1.0 | 1.948 | 3.464 | 0.251 | 2.172 | 0.288 | 1.643 | 0.617 | 3.142 |
| 0.35 | 0.2 | 1.0 | 1.0 | 2.050 | 3.503 | 0.236 | 2.364 | 0.306 | 1.590 | 0.601 | 3.142 |
| 0.40 | 0.2 | 1.0 | 1.0 | 2.138 | 3.539 | 0.199 | 2.586 | 0.322 | 1.546 | 0.586 | 3.142 |
| 0.45 | 0.2 | 1.0 | 1.0 | 2.216 | 3.573 | 0.087 | 2.948 | 0.337 | 1.511 | 0.573 | 3.142 |
| 0.50 | 0.2 | 1.0 | 1.0 | 2.261 | 3.593 | 0.059 | 3.142 | 0.346 | 1.491 | 0.565 | 3.142 |
| 0.55 | 0.2 | 1.0 | 1.0 | 2.302 | 3.612 | 0.129 | 3.142 | 0.355 | 1.474 | 0.558 | 3.142 |
| 0.60 | 0.2 | 1.0 | 1.0 | 2.347 | 3.633 | 0.201 | 3.142 | 0.364 | 1.456 | 0.550 | 3.142 |
| 0.65 | 0.2 | 1.0 | 1.0 | 2.395 | 3.655 | 0.276 | 3.142 | 0.374 | 1.438 | 0.542 | 3.142 |
| 0.70 | 0.2 | 1.0 | 1.0 | 2.444 | 3.680 | 0.352 | 3.142 | 0.384 | 1.420 | 0.533 | 3.142 |
| 0.75 | 0.2 | 1.0 | 1.0 | 2.496 | 3.705 | 0.432 | 3.142 | 0.396 | 1.402 | 0.524 | 3.142 |
| 0.80 | 0.2 | 1.0 | 1.0 | 2.550 | 3.733 | 0.514 | 3.142 | 0.408 | 1.384 | 0.514 | 3.142 |
| 0.00 | 0.4 | 1.0 | 1.0 | 0.110 | 3.157 | 0.232 | 0.113 | 0.306 | 3.142 | 0.758 | 3.142 |
| 0.05 | 0.4 | 1.0 | 1.0 | 0.762 | 3.313 | 0.284 | 0.801 | 0.075 | 3.142 | 0.683 | 3.142 |
| 0.10 | 0.4 | 1.0 | 1.0 | 1.028 | 3.412 | 0.309 | 1.099 | 0.006 | 3.135 | 0.639 | 3.142 |

(fortgesetzt)

| $P_1/P_{max0}$ | $P_2/P_{maX0}$ | $n_1U_{1.s}/U_p$ | $n_2U_{2.s}/U_p$ | $\alpha_2$ | $\alpha_3$ | $\beta_{a1}-\alpha_1$ | $\beta_{b1}-\beta_{a1}$ | $\beta_{a2}-\alpha_2$ | $\beta_{b2}-\beta_{a2}$ | $\beta_{a3}-\alpha_3$ | $\beta_{b3}-\beta_{a3}$ |
|---|---|---|---|---|---|---|---|---|---|---|---|
| 0.15 | 0.4 | 1.0 | 1.0 | 1.235 | 3.481 | 0.317 | 1.340 | 0.156 | 2.740 | 0.610 | 3.142 |
| 0.20 | 0.4 | 1.0 | 1.0 | 1.401 | 3.539 | 0.322 | 1.546 | 0.199 | 2.586 | 0.586 | 3.142 |
| 0.25 | 0.4 | 1.0 | 1.0 | 1.541 | 3.591 | 0.323 | 1.735 | 0.227 | 2.482 | 0.566 | 3.142 |
| 0.30 | 0.4 | 1.0 | 1.0 | 1.661 | 3.638 | 0.318 | 1.915 | 0.248 | 2.403 | 0.548 | 3.142 |
| 0.35 | 0.4 | 1.0 | 1.0 | 1.766 | 3.681 | 0.305 | 2.097 | 0.265 | 2.341 | 0.532 | 3.142 |
| 0.40 | 0.4 | 1.0 | 1.0 | 1.860 | 3.720 | 0.280 | 2.290 | 0.280 | 2.290 | 0.519 | 3.142 |
| 0.45 | 0.4 | 1.0 | 1.0 | 1.944 | 3.756 | 0.234 | 2.515 | 0.292 | 2.247 | 0.507 | 3.142 |
| 0.50 | 0.4 | 1.0 | 1.0 | 2.020 | 3.789 | 0.129 | 2.848 | 0.303 | 2.212 | 0.496 | 3.142 |
| 0.55 | 0.4 | 1.0 | 1.0 | 2.072 | 3.812 | 0.052 | 3.142 | 0.311 | 2.188 | 0.489 | 3.142 |
| 0.60 | 0.4 | 1.0 | 1.0 | 2.120 | 3.833 | 0.127 | 3.142 | 0.318 | 2.168 | 0.482 | 3.142 |
| 0.65 | 0.4 | 1.0 | 1.0 | 2.171 | 3.856 | 0.205 | 3.142 | 0.325 | 2.147 | 0.475 | 3.142 |
| 0.70 | 0.4 | 1.0 | 1.0 | 2.226 | 3.882 | 0.284 | 3.142 | 0.333 | 2.126 | 0.468 | 3.142 |
| 0.75 | 0.4 | 1.0 | 1.0 | 2.284 | 3.909 | 0.367 | 3.142 | 0.341 | 2.105 | 0.460 | 3.142 |
| 0.80 | 0.4 | 1.0 | 1.0 | 2.346 | 3.937 | 0.452 | 3.142 | 0.350 | 2.084 | 0.452 | 3.142 |
| 0.00 | 0.8 | 1.0 | 1.0 | 0.080 | 3.182 | 0.411 | 0.088 | 0.745 | 3.142 | 0.745 | 3.142 |
| 0.05 | 0.8 | 1.0 | 1.0 | 0.617 | 3.450 | 0.405 | 0.684 | 0.623 | 3.142 | 0.623 | 3.142 |
| 0.10 | 0.8 | 1.0 | 1.0 | 0.860 | 3.572 | 0.408 | 0.969 | 0.573 | 3.142 | 0.573 | 3.142 |
| 0.15 | 0.8 | 1.0 | 1.0 | 1.038 | 3.661 | 0.409 | 1.191 | 0.540 | 3.142 | 0.540 | 3.142 |
| 0.20 | 0.8 | 1.0 | 1.0 | 1.183 | 3.733 | 0.408 | 1.384 | 0.514 | 3.142 | 0.514 | 3.142 |
| 0.25 | 0.8 | 1.0 | 1.0 | 1.305 | 3.794 | 0.402 | 1.562 | 0.494 | 3.142 | 0.494 | 3.142 |
| 0.30 | 0.8 | 1.0 | 1.0 | 1.412 | 3.847 | 0.392 | 1.734 | 0.478 | 3.142 | 0.478 | 3.142 |
| 0.35 | 0.8 | 1.0 | 1.0 | 1.507 | 3.895 | 0.375 | 1.906 | 0.464 | 3.142 | 0.464 | 3.142 |
| 0.40 | 0.8 | 1.0 | 1.0 | 1.592 | 3.937 | 0.350 | 2.084 | 0.452 | 3.142 | 0.452 | 3.142 |
| 0.45 | 0.8 | 1.0 | 1.0 | 1.669 | 3.976 | 0.312 | 2.280 | 0.443 | 3.142 | 0.443 | 3.142 |
| 0.50 | 0.8 | 1.0 | 1.0 | 1.740 | 4.011 | 0.250 | 2.515 | 0.434 | 3.142 | 0.434 | 3.142 |
| 0.55 | 0.8 | 1.0 | 1.0 | 1.805 | 4.044 | 0.115 | 2.891 | 0.427 | 3.142 | 0.427 | 3.142 |
| 0.60 | 0.8 | 1.0 | 1.0 | 1.857 | 4.070 | 0.064 | 3.142 | 0.422 | 3.142 | 0.422 | 3.142 |
| 0.65 | 0.8 | 1.0 | 1.0 | 1.910 | 4.096 | 0.145 | 3.142 | 0.417 | 3.142 | 0.417 | 3.142 |
| 0.70 | 0.8 | 1.0 | 1.0 | 1.967 | 4.125 | 0.228 | 3.142 | 0.412 | 3.142 | 0.412 | 3.142 |
| 0.75 | 0.8 | 1.0 | 1.0 | 2.028 | 4.156 | 0.314 | 3.142 | 0.408 | 3.142 | 0.408 | 3.142 |
| 0.80 | 0.8 | 1.0 | 1.0 | 2.094 | 4.189 | 0.404 | 3.142 | 0.404 | 3.142 | 0.404 | 3.142 |
| 0.00 | 0.8 | 0.75 | 1.0 | 0.080 | 3.182 | 0.396 | 0.117 | 0.745 | 3.142 | 0.745 | 3.142 |
| 0.05 | 0.8 | 0.75 | 1.0 | 0.617 | 3.450 | 0.283 | 0.928 | 0.623 | 3.142 | 0.623 | 3.142 |
| 0.10 | 0.8 | 0.75 | 1.0 | 0.860 | 3.572 | 0.222 | 1.340 | 0.573 | 3.142 | 0.573 | 3.142 |
| 0.15 | 0.8 | 0.75 | 1.0 | 1.038 | 3.661 | 0.160 | 1.690 | 0.540 | 3.142 | 0.540 | 3.142 |
| 0.20 | 0.8 | 0.75 | 1.0 | 1.183 | 3.733 | 0.082 | 2.035 | 0.514 | 3.142 | 0.514 | 3.142 |

Table heading: $P_3/P_{max}$ = 0.8 und $n_3U_{3,s}/U_p$ = 1.0

(fortgesetzt)

| $P_3 / P_{max} = 0.8$ und $n_3 U_{3,s} / U_p = 1.0$ | | | | | | | | | | | |
|---|---|---|---|---|---|---|---|---|---|---|---|
| $P_1/P_{max0}$ | $P_2/P_{maX0}$ | $n_1 U_{1.s}/U_p$ | $n_2 U_{2.s}/U_p$ | $\alpha_2$ | $\alpha_3$ | $\beta_{a1} - \alpha_1$ | $\beta_{b1} - \beta_{a1}$ | $\beta_{a2} - \alpha_2$ | $\beta_{b2} - \beta_{a2}$ | $\beta_{a3} - \alpha_3$ | $\beta_{b3} - \beta_{a3}$ |
| 0.25 | 0.8 | 0.75 | 1.0 | 1.305 | 3.794 | -0.036 | 2.439 | 0.494 | 3.142 | 0.494 | 3.142 |
| 0.30 | 0.8 | 0.75 | 1.0 | 1.403 | 3.843 | -0.303 | 3.142 | 0.479 | 3.142 | 0.479 | 3.142 |
| 0.35 | 0.8 | 0.75 | 1.0 | 1.469 | 3.876 | -0.189 | 3.142 | 0.469 | 3.142 | 0.469 | 3.142 |
| 0.40 | 0.8 | 0.75 | 1.0 | 1.543 | 3.913 | -0.075 | 3.142 | 0.459 | 3.142 | 0.459 | 3.142 |
| 0.45 | 0.8 | 0.75 | 1.0 | 1.625 | 3.954 | 0.039 | 3.142 | 0.448 | 3.142 | 0.448 | 3.142 |
| 0.50 | 0.8 | 0.75 | 1.0 | 1.716 | 4.000 | 0.155 | 3.142 | 0.437 | 3.142 | 0.437 | 3.142 |
| 0.55 | 0.8 | 0.75 | 1.0 | 1.816 | 4.049 | 0.274 | 3.142 | 0.426 | 3.142 | 0.426 | 3.142 |
| 0.60 | 0.8 | 0.75 | 1.0 | 1.924 | 4.104 | 0.397 | 3.142 | 0.416 | 3.142 | 0.416 | 3.142 |
| 0.65 | 0.8 | 0.75 | 1.0 | 2.044 | 4.163 | 0.527 | 3.142 | 0.407 | 3.142 | 0.407 | 3.142 |
| 0.70 | 0.8 | 0.75 | 1.0 | 2.177 | 4.230 | 0.667 | 3.142 | 0.400 | 3.142 | 0.400 | 3.142 |
| 0.75 | 0.8 | 0.75 | 1.0 | 2.329 | 4.306 | 0.825 | 3.142 | 0.396 | 3.142 | 0.396 | 3.142 |
| 0.80 | 0.8 | 0.75 | 1.0 | 2.517 | 4.400 | 1.016 | 3.142 | 0.400 | 3.142 | 0.400 | 3.142 |
| 0.00 | 0.8 | 1.5 | 1.0 | 0.080 | 3.182 | 0.425 | 0.058 | 0.745 | 3.142 | 0.745 | 3.142 |
| 0.05 | 0.8 | 1.5 | 1.0 | 0.617 | 3.450 | 0.522 | 0.451 | 0.623 | 3.142 | 0.623 | 3.142 |
| 0.10 | 0.8 | 1.5 | 1.0 | 0.860 | 3.572 | 0.577 | 0.631 | 0.573 | 3.142 | 0.573 | 3.142 |
| 0.15 | 0.8 | 1.5 | 1.0 | 1.038 | 3.661 | 0.621 | 0.767 | 0.540 | 3.142 | 0.540 | 3.142 |
| 0.20 | 0.8 | 1.5 | 1.0 | 1.183 | 3.733 | 0.660 | 0.879 | 0.514 | 3.142 | 0.514 | 3.142 |
| 0.25 | 0.8 | 1.5 | 1.0 | 1.305 | 3.794 | 0.695 | 0.977 | 0.494 | 3.142 | 0.494 | 3.142 |
| 0.30 | 0.8 | 1.5 | 1.0 | 1.412 | 3.847 | 0.726 | 1.066 | 0.478 | 3.142 | 0.478 | 3.142 |
| 0.35 | 0.8 | 1.5 | 1.0 | 1.507 | 3.895 | 0.754 | 1.149 | 0.464 | 3.142 | 0.464 | 3.142 |
| 0.40 | 0.8 | 1.5 | 1.0 | 1.592 | 3.937 | 0.779 | 1.227 | 0.452 | 3.142 | 0.452 | 3.142 |
| 0.45 | 0.8 | 1.5 | 1.0 | 1.669 | 3.976 | 0.801 | 1.301 | 0.443 | 3.142 | 0.443 | 3.142 |
| 0.50 | 0.8 | 1.5 | 1.0 | 1.740 | 4.011 | 0.821 | 1.374 | 0.434 | 3.142 | 0.434 | 3.142 |
| 0.55 | 0.8 | 1.5 | 1.0 | 1.805 | 4.044 | 0.838 | 1.445 | 0.427 | 3.142 | 0.427 | 3.142 |
| 0.60 | 0.8 | 1.5 | 1.0 | 1.865 | 4.074 | 0.853 | 1.516 | 0.421 | 3.142 | 0.421 | 3.142 |
| 0.65 | 0.8 | 1.5 | 1.0 | 1.921 | 4.102 | 0.865 | 1.587 | 0.416 | 3.142 | 0.416 | 3.142 |
| 0.70 | 0.8 | 1.5 | 1.0 | 1.973 | 4.128 | 0.874 | 1.659 | 0.412 | 3.142 | 0.412 | 3.142 |
| 0.75 | 0.8 | 1.5 | 1.0 | 2.021 | 4.152 | 0.880 | 1.732 | 0.408 | 3.142 | 0.408 | 3.142 |
| 0.80 | 0.8 | 1.5 | 1.0 | 2.066 | 4.175 | 0.884 | 1.807 | 0.405 | 3.142 | 0.405 | 3.142 |
| 0.00 | 0.8 | 1.0 | 0.75 | 0.073 | 3.194 | 0.479 | 0.083 | 1.167 | 3.142 | 0.739 | 3.142 |
| 0.05 | 0.8 | 1.0 | 0.75 | 0.562 | 3.535 | 0.470 | 0.648 | 1.102 | 3.142 | 0.588 | 3.142 |
| 0.10 | 0.8 | 1.0 | 0.75 | 0.780 | 3.681 | 0.471 | 0.918 | 1.076 | 3.142 | 0.532 | 3.142 |
| 0.15 | 0.8 | 1.0 | 0.75 | 0.938 | 3.785 | 0.470 | 1.131 | 1.058 | 3.142 | 0.497 | 3.142 |
| 0.20 | 0.8 | 1.0 | 0.75 | 1.066 | 3.868 | 0.466 | 1.317 | 1.045 | 3.142 | 0.472 | 3.142 |
| 0.25 | 0.8 | 1.0 | 0.75 | 1.173 | 3.937 | 0.457 | 1.490 | 1.035 | 3.142 | 0.453 | 3.142 |
| 0.30 | 0.8 | 1.0 | 0.75 | 1.267 | 3.997 | 0.443 | 1.657 | 1.028 | 3.142 | 0.438 | 3.142 |

(fortgesetzt)

| $P_1/P_{max0}$ | $P_2/P_{maX0}$ | $n_1U_{1.s}/U_p$ | $n_2U_{2.s}/U_p$ | $\alpha_2$ | $\alpha_3$ | $\beta_{a1}-\alpha_1$ | $\beta_{b1}-\beta_{a1}$ | $\beta_{a2}-\alpha_2$ | $\beta_{b2}-\beta_{a2}$ | $\beta_{a3}-\alpha_3$ | $\beta_{b3}-\beta_{a3}$ |
|---|---|---|---|---|---|---|---|---|---|---|---|
| $P_3/P_{max}=0.8$ und $n_3U_{3.s}/U_p=1.0$ |
| 0.35 | 0.8 | 1.0 | 0.75 | 1.349 | 4.050 | 0.423 | 1.825 | 1.022 | 3.142 | 0.426 | 3.142 |
| 0.40 | 0.8 | 1.0 | 0.75 | 1.422 | 4.098 | 0.394 | 1.999 | 1.018 | 3.142 | 0.417 | 3.142 |
| 0.45 | 0.8 | 1.0 | 0.75 | 1.488 | 4.140 | 0.354 | 2.189 | 1.015 | 3.142 | 0.410 | 3.142 |
| 0.50 | 0.8 | 1.0 | 0.75 | 1.549 | 4.180 | 0.294 | 2.411 | 1.013 | 3.142 | 0.405 | 3.142 |
| 0.55 | 0.8 | 1.0 | 0.75 | 1.604 | 4.215 | 0.188 | 2.718 | 1.012 | 3.142 | 0.401 | 3.142 |
| 0.60 | 0.8 | 1.0 | 0.75 | 1.654 | 4.248 | 0.040 | 3.142 | 1.011 | 3.142 | 0.398 | 3.142 |
| 0.65 | 0.8 | 1.0 | 0.75 | 1.705 | 4.282 | 0.126 | 3.142 | 1.011 | 3.142 | 0.397 | 3.142 |
| 0.70 | 0.8 | 1.0 | 0.75 | 1.760 | 4.318 | 0.214 | 3.142 | 1.012 | 3.142 | 0.396 | 3.142 |
| 0.75 | 0.8 | 1.0 | 0.75 | 1.819 | 4.358 | 0.305 | 3.142 | 1.013 | 3.142 | 0.397 | 3.142 |
| 0.80 | 0.8 | 1.0 | 0.75 | 1.883 | 4.400 | 0.400 | 3.142 | 1.016 | 3.142 | 0.400 | 3.142 |
| 0.00 | 0.8 | 1.0 | 1.5 | 0.078 | 3.185 | 0.430 | 0.086 | 1.213 | 1.892 | 0.744 | 3.142 |
| 0.05 | 0.8 | 1.0 | 1.5 | 0.604 | 3.469 | 0.420 | 0.675 | 1.106 | 1.883 | 0.615 | 3.142 |
| 0.10 | 0.8 | 1.0 | 1.5 | 0.844 | 3.591 | 0.420 | 0.958 | 1.061 | 1.874 | 0.566 | 3.142 |
| 0.15 | 0.8 | 1.0 | 1.5 | 1.022 | 3.679 | 0.418 | 1.180 | 1.030 | 1.866 | 0.533 | 3.142 |
| 0.20 | 0.8 | 1.0 | 1.5 | 1.168 | 3.749 | 0.415 | 1.375 | 1.005 | 1.858 | 0.509 | 3.142 |
| 0.25 | 0.8 | 1.0 | 1.5 | 1.292 | 3.807 | 0.407 | 1.554 | 0.986 | 1.850 | 0.490 | 3.142 |
| 0.30 | 0.8 | 1.0 | 1.5 | 1.401 | 3.858 | 0.396 | 1.727 | 0.970 | 1.844 | 0.475 | 3.142 |
| 0.35 | 0.8 | 1.0 | 1.5 | 1.498 | 3.903 | 0.378 | 1.900 | 0.956 | 1.838 | 0.462 | 3.142 |
| 0.40 | 0.8 | 1.0 | 1.5 | 1.586 | 3.943 | 0.352 | 2.081 | 0.944 | 1.832 | 0.451 | 3.142 |
| 0.45 | 0.8 | 1.0 | 1.5 | 1.666 | 3.979 | 0.312 | 2.278 | 0.933 | 1.828 | 0.442 | 3.142 |
| 0.50 | 0.8 | 1.0 | 1.5 | 1.740 | 4.012 | 0.250 | 2.515 | 0.924 | 1.823 | 0.434 | 3.142 |
| 0.55 | 0.8 | 1.0 | 1.5 | 1.807 | 4.042 | 0.113 | 2.895 | 0.916 | 1.820 | 0.428 | 3.142 |
| 0.60 | 0.8 | 1.0 | 1.5 | 1.861 | 4.066 | 0.065 | 3.142 | 0.910 | 1.817 | 0.423 | 3.142 |
| 0.65 | 0.8 | 1.0 | 1.5 | 1.916 | 4.090 | 0.146 | 3.142 | 0.904 | 1.814 | 0.418 | 3.142 |
| 0.70 | 0.8 | 1.0 | 1.5 | 1.976 | 4.117 | 0.230 | 3.142 | 0.897 | 1.812 | 0.414 | 3.142 |
| 0.75 | 0.8 | 1.0 | 1.5 | 2.040 | 4.145 | 0.316 | 3.142 | 0.891 | 1.809 | 0.409 | 3.142 |
| 0.80 | 0.8 | 1.0 | 1.5 | 2.108 | 4.175 | 0.405 | 3.142 | 0.884 | 1.807 | 0.405 | 3.142 |

**Fig. 12** stellt die für das (vorbekannte) vereinfachte Steuerverfahren resultierenden Leitverluste den Leitverlusten gegenüber, die mit dem optimierten Steuerverfahren für minimale Leitverluste für einen mehrphasigen Gleichspannungskonverter mit $m$ = 3, in Abhängigkeit der am ersten potentialgetrennten Gleichspannungsanschluss vorliegenden Leistung $P_{1,s}$ und, sofern in der Abbildung nicht abweichend angegeben, unter Verwendung folgender Kenndaten, resultieren: $T_s$ = 20 μs, $n_1 = n_2 = n_3$ = 1, $L_1 = L_2 = L_3$ = 222 μH, $R_1 = R_2 = R_3$ = 1.5 Ω, $U_p$ = 700 V, $U_{1,s} = U_{2,s} = U_{3,s}$ = 700 V, $P_{2,s} = P_{3,s}$ = 4 kW Für die betrachteten Beispiele liegt immer eine Reduktion der Leitverluste vor und die erzielte Verbesserung liegt typisch im Bereich zwischen 5% und 20%.

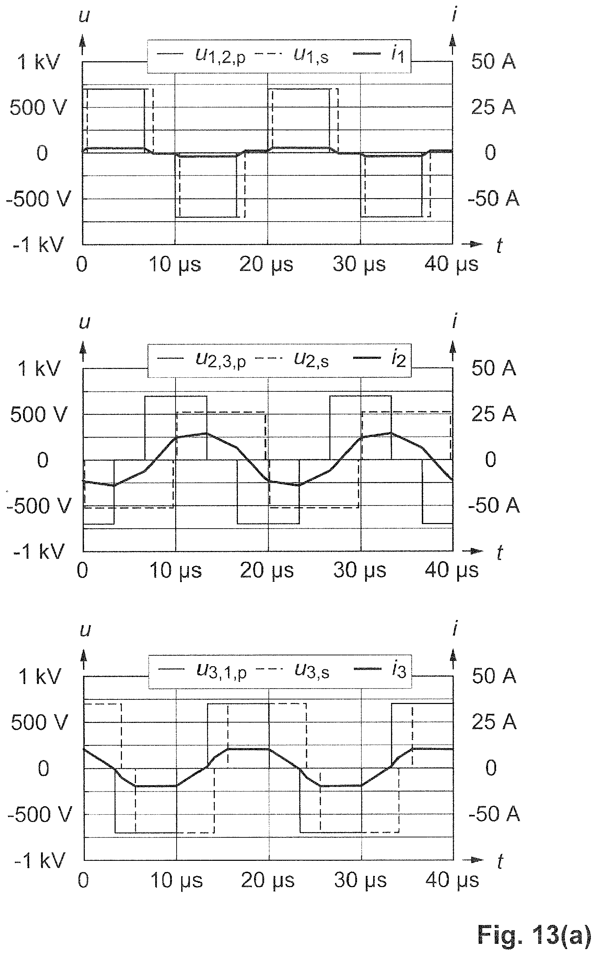

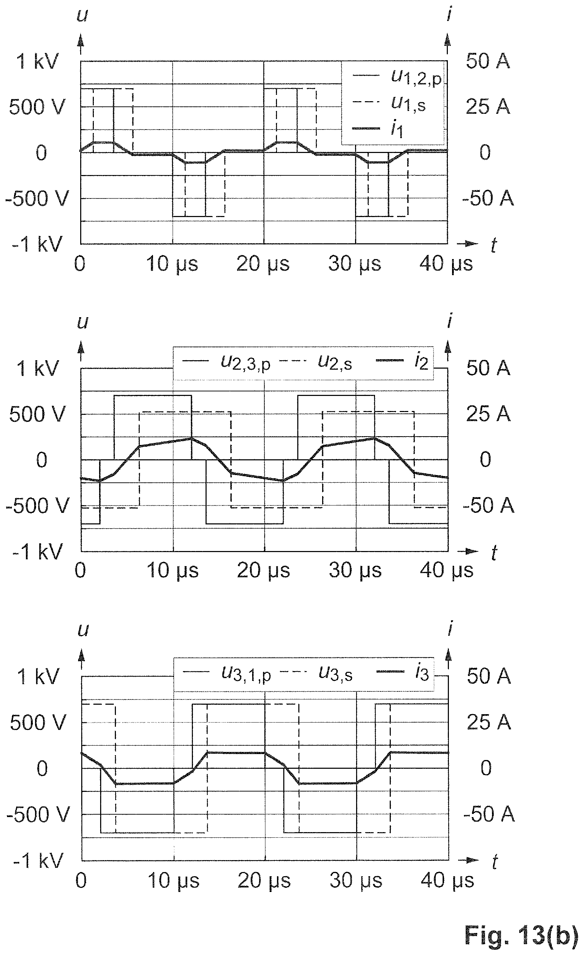

**Fig. 13** zeigt gemäss (a) simulierte Spannungs- und Stromverläufe mit dem vereinfachten Steuerverfahren und (b) dem Steuerverfahren für minimale Leitverluste des mehrphasigen Gleichspannungskonverters; dargestellte Verläufe in (a) und (b): oben: $u_{1,2,p}$, $U_{1,s}$ und den Strom $i_1$ durch $L_1$; Mitte: $u_{2,3,p}$, $u_{2,s}$ und den Strom $i_2$ durch $L_2$; unten: $u_{3,1,p}$, $U_{3,s}$ und den Strom $i_3$ durch $L_3$. Die dargestellten Verläufe wurden ermittelt für: $m$ = 3, $U_p$ = 700 V, $U_{1,s}$ = 700 V, $u_{2,s}$ = 525 V, $U_{3,s}$ = 700 V, $P_{1,s}$ = 1 kW, $P_{2,s}$ = 3.7 kW, $P_{3,s}$ = 4 kW; im Gegensatz zum vereinfachten Steuerverfahren verwendet das Steuerverfahren für minimale Leitverluste u.a. auch $\alpha_3 - \alpha_2 > (2\pi/3)$ und $2\pi - \alpha_3 > (2\pi/3)$, erzielt eine Verringerung der Effektivwerte der Ströme in den Wicklungen des zweiten und dritten HF-Transformators und insgesamt eine Verringerung der Summe aller Leitverluste. Gewählte Kenndaten: $n_1 = n_2 = n_3 = 1$, $L_1 = L_2 = L_3 = 222\ \mu H$, $T_s = 20\ \mu s$.

**Die Ausführungsform des Steuerverfahrens für das Hochfahren des mehrphasigen Gleichspannungskonverters mit begrenztem Ausgangsstrom** begründet sich darin, dass das vereinfachte Steuerverfahren und das oben beschriebene Steuerverfahren für minimale Leitverluste während des Hochfahrens des mehrphasigen Gleichspannungskonverters, aufgrund des Aufladens der an die potentialgetrennten Gleichspannungsanschlüssen angeschlossenen Zwischenkreiskondensatoren, sehr hohe Ströme in allen Leistungshalbleitern und in allen HF-Transformatoren des betrachteten mehrphasigen Gleichspannungskonverters verursachen. Die gleichzeitige Reduktion der Effektivwerte der Ströme in allen Leistungshalbleitern und in allen HF-Transformatoren lässt sich nur erreichen, wenn durch geeignete Massnahmen eine wesentliche Reduktion der Effektivwerte der zwischen den ersten und zweiten Eingangsklemmen aller primärseitigen HF-Netzwerke vorliegenden Spannungen bis hin zu Werten nahe Null erreicht wird, was sich, aufgrund der Verkettungen der zwischen den ersten und zweiten Eingangsklemmen der primärseitigen HF-Netzwerke vorliegenden Spannungen, nur erreichen lässt, wenn die Tastverhältnisse der Steuersignale der Halbbrücken des HF-Wechselrichters von 50% abweichen, d.h. es gilt $d_{k,p} \neq 50\%$ für $1 \leq k \leq m$.

Das Steuerverfahren für das Hochfahrens des mehrphasigen Gleichspannungskonverters mit begrenztem Ausgangsstrom ist durch folgende Definitionen gekennzeichnet, wobei $1 \leq k \leq m$ gilt:

- die Aktivierungssignale aller Halbbrücken des HF-Wechselrichters sind 1 und
- die Aktivierungssignale aller Halbbrücken der HF-Gleichrichter sind 0, d.h. alle HF-Gleichrichter werden als Diodengleichrichter betrieben und entsprechend stellen sich $\beta_{ak}$ und $\beta_{bk}$ je nach Betriebspunkt natürlich ein.
- entweder $0 < d_{k,p} < 1\ /\ m$ oder $(m - 1)\ /\ m < d_{k,p} < 1$.

Optional, für paralleles Hochfahren aller k Module, können die primärseitigen Tastverhältnisse gleich gesetzt werden:

- $d_{k,p} = d_{1,p}$

Typischerweise gilt dabei auch einer oder beide der folgenden Zusammenhänge:

- $d_{ak,s} = d_{bk,s} = 50\%$,
- $\alpha_k = (k - 1)\ 2\pi/m.$

Zur Steuerung des Ausgangsstroms des $k$-ten sekundärseitigen HF-Gleichrichters verbleiben als Freiheitsgrade das Tastverhältnis $d_{k,p}$ und die Schaltperiode $T_s$. Bei gegebenem Wert für $T_s$ wird $d_{k,p}$ so gewählt, dass diesekundärseitigen HF-Gleichrichter sinnvolle bzw. aufgrund der Vorgaben erforderliche Ströme zum Laden der Ausgangskondensatoren bereitstellen. Die Schaltperiode kann so eingestellt werden, dass im vorliegenden Arbeitspunkt ein gewünschtes Ziel, z.B. minimale Verluste, erreicht wird.

**Fig. 14** stellt Beispiele für Verläufe von $d_{1,p}$ für einen mehrphasigen Gleichspannungskonverter mit $m = 3$ für verschiedene Betriebspunkte dar, unter den Annahmen, dass die primärseitigen HF-Netzwerke durch HF-Kondensatornetzwerke und die sekundärseitigen HF-Netzwerke durch HF-Serienschwingkreisnetzwerke realisiert werden, dass die Induktivität des $k$-ten HF-Serienschwingkreisnetzwerks mit $L_k$ bezeichnet ($1 \leq k \leq m$) wird und dass die Kapazitäten der Kondensatoren aller HF-Netzwerke so gross gewählt werden, dass diese Kondensatoren nur die Gleichanteile von den HF-Transformatoren fernhalten, aber keine nennenswerten Einflüsse auf die Stromverläufe in den Wicklungen der HF-Transformatoren haben. Als Gültigkeitsbereich von $d_{1,p}$ wurde der erste oben genannte Gültigkeitsbereich, $0 < d_{1,p} < 1\ /\ m$, gewählt (dasselbe Ergebnis würde für $1 - d_{1,p}$ resultieren). Für $1 \leq k \leq m$ gilt: die Verläufe von $d_{1,p}$ sind in Abhängigkeit des Ausgangsstromes des $k$-ten sekundärseitigen HF-Gleichrichters und für verschiedene Werte von $U_{k,s}$ = {0, 200 V, 400 V, 600 V} dargestellt. Die für die Ermittlung der in **Fig. 14** abgebildeten Verläufe gewählten Betriebspunkte sind ausserdem charakterisiert durch $n_1 = n_2 = n_3 = 1$, $L_1 = L_2 = L_3 = 222\ \mu H$, $U_p = 700\ V$ und $T_s = 20\ \mu s$, d.h. zur Vereinfachung der Darstellung wurde eine konstante Schaltperiode gewählt. Als Ergebnis resultiert für monoton ansteigenden Ausgangsstrom des $k$-ten Gleichspannungskonverters und konstanten Wert für $U_{k,s}$ ein monoton ansteigendes Tastverhältnis $d_{1,p}$. Für konstantes Tastverhältnis und monoton ansteigendes $U_{k,s}$ des $k$-ten Gleichspannungskonverters resultiert ein monoton abfallender Ausgangsstrom des $k$-ten Gleichspannungskonverters, welcher für $U_{k,s} = U_p\ /\ n_k$ verschwindet. Aufgrund dieses Zusammenhangs stellt das Steuerverfahren für das Hochfahren des mehrphasigen Gleichspannungskonverters mit begrenztem Ausgangsstrom inhärent sicher, dass diese Grenze nicht überschritten wird, in einer praktischen Anwendung daher $U_{k,s} < U_p\ /\ n_k$ gilt, was insbesondere während der Dauer des Hochfahrens von praktischem Nutzen sein kann, da während dieser Zeitspanne eventuell auch einzelne Überwachungs- und Messkomponenten zunächst erst gestartet werden.

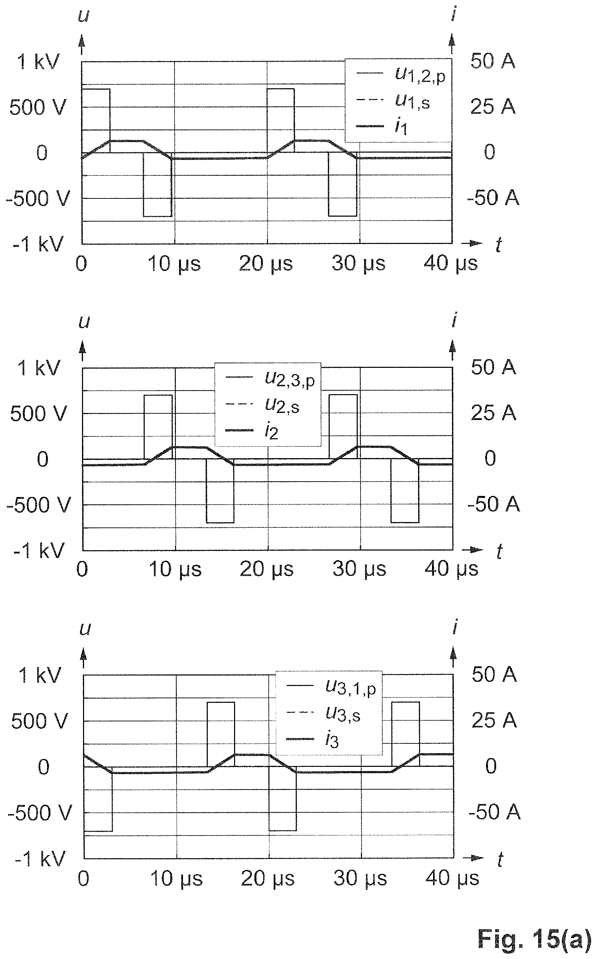

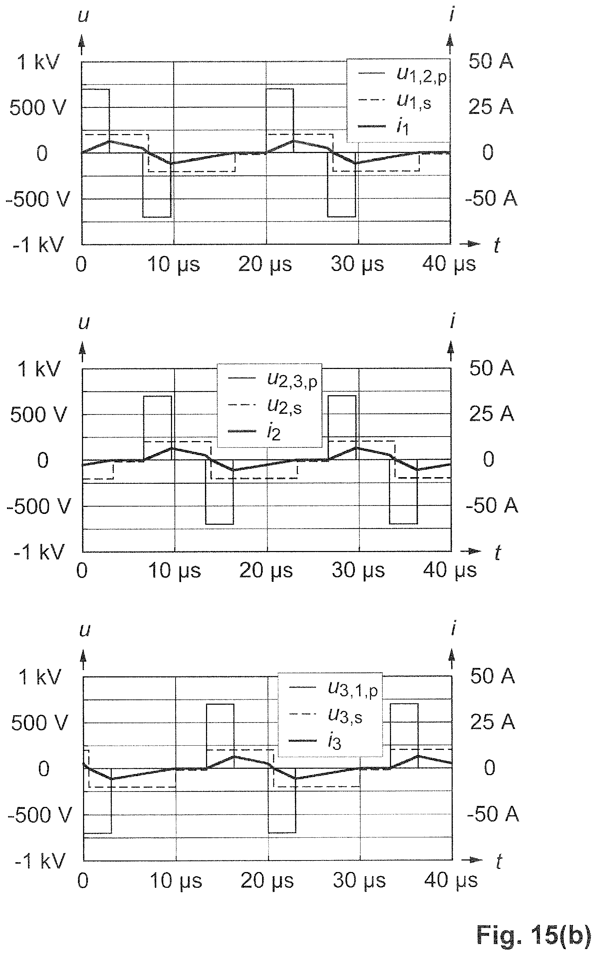

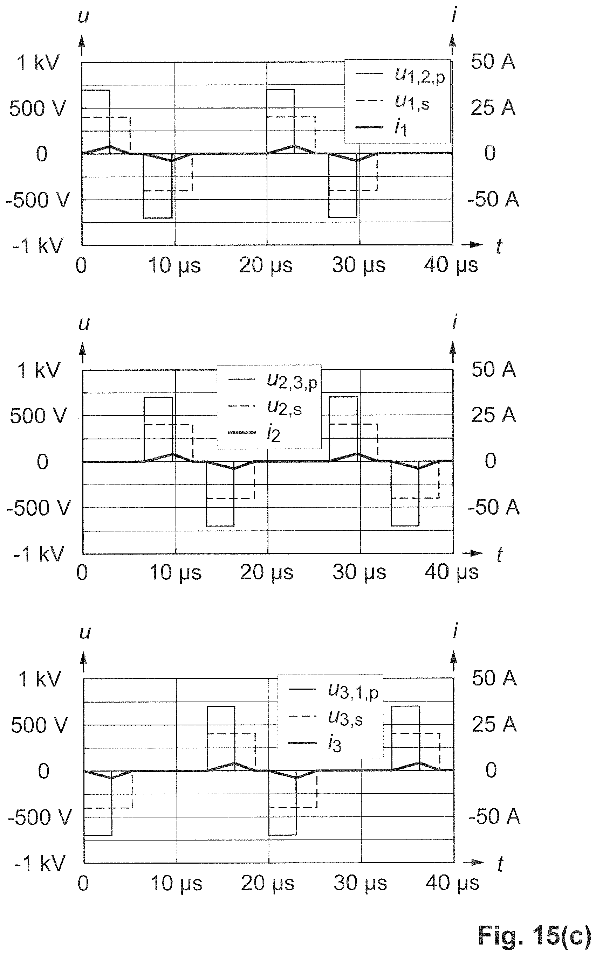

**Fig. 15** zeigt simulierte Spannungs- und Stromverläufe, die mit dem Steuerverfahren für das Hochfahren des mehrphasigen Gleichspannungskonverters mit begrenztem Ausgangsstrom während des Hochstartvorgangs für $m = 3$, $d_{1,p} = d_{2,p} = d_{3,p} = 15\%$, $U_p = 700$ V bei verschiedenen Ausgangsspannungen resultieren: (a) $U_{1,s} = u_{2,s} = U_{3,s} = 0$, (b) $U_{1,s} = u_{2,s} = U_{3,s} = 200$ V und (c) $U_{1,s} = U_{2,s} = U_{3,s} = 400$ V. $n_1 = n_2 = n_3 = 1$, $L_1 = L_2 = L_3 = 222$ μH und $T_s = 20$ μs. Dargestellte Verläufe in (a), (b) und (c): oben: $u_{1,2,p}$, $U_{1,s}$ und Strom durch $L_1$; Mitte: $u_{2,3,p}$, $u_{2,s}$ und Strom durch $L_2$; unten: $u_{3,1,p}$, $u_{3,s}$ und Strom durch $L_3$. Gewählte Kenndaten: $n_1 = n_2 = n_3 = 1$, $L_1 = L_2 = L_3 = 222$ μH, $T_s = 20$ μs.

**Die Ausführungsform des Steuerverfahrens für den Betrieb mit geringen Leistungen an allen potentialgetrennten Gleichspannungsanschlüssen des mehrphasigen Gleichspannungskonverters** begründet sich darin, dass es bei geringen Ausgangsleistungen für die genaue und stabile Regelung aller Ausgangsströme von Vorteil ist, wenn beim vorliegenden mehrphasigen Gleichspannungskonverter die zwischen den ersten und zweiten Eingangsklemmen aller primärseitigen HF-Netzwerke und zwischen den ersten und zweiten Ausgangsklemmen aller sekundärseitigen HF-Netzwerke vorliegenden Spannungen geringe Effektivwerte aufweisen, d.h. Spannungsverläufe aufweisen, die für eine, im Verhältnis zur Schaltperiode, relativ lange Zeitspanne nahe bei Null und nur für eine relativ kurze Zeitspanne positiv bzw. negativ sind. Mit dem oben beschriebene Steuerverfahren für minimale Leitverluste des mehrphasigen Gleichspannungskonverters, sowie mit dem vereinfachten Steuerverfahren, lässt sich dies jedoch für die primärseitigen HF-Netzwerke, aufgrund der verwendeten Tastverhältnisse von $d_{k,p} = 50\%$, $1 \leq k \leq$; $m$, und aufgrund der Verkettungen der Spannungen, die zwischen den ersten und zweiten Eingangsklemmen der primärseitigen HF-Netzwerke anliegen, nicht für alle $m$ primärseitigen HF-Netzwerke gleichzeitig erreichen. Die gleichzeitig Reduktion der Effektivwerte der zwischen den ersten und zweiten Eingangsklemmen aller primärseitigen HF-Netzwerke vorliegenden Spannungen bis hin zu Werten nahe Null lässt sich, aufgrund der Verkettungen der zwischen den ersten und zweiten Eingangsklemmen der primärseitigen HF-Netzwerke vorliegenden Spannungen, nur dadurch erreichen, dass die Tastverhältnisse der Steuersignale der Halbbrücken des HF-Wechselrichters von 50% abweichen, d.h. es gilt $d_{k,p} \neq 50\%$ für $1 \leq k \leq m$.

Als geringe Leistungen können Leistungen mit weniger als 20% oder 30% der maximalen Leistung betrachtet werden.

Das Steuerverfahren für den Betrieb mit geringen Leistungen an den potentialgetrennten Gleichspannungsanschlüssen des mehrphasigen Gleichspannungskonverters ist durch folgende Definitionen gekennzeichnet, wobei $1 \leq k \leq m$ gilt:

- alle Aktivierungssignale sind 1.
- $0 < d_{k,p} + d_{ak,s} < 1 / m$, d.h. in jedem Modul liegt die Summe der Tastverhältnisse der Primär- und Sekundärseite zwischen Null und $1 / m$.

Zudem können einer oder mehrere der folgenden Zusammenhänge durch die Steuerung realisiert werden:

- $d_{k,p} = d_{1,p}$, d.h. die Tastverhältnisse der getrennten Gleichspannungsanschlüsse sind gleich. Dies ist bei symmetrischer Last zweckmässig.
- $d_{ak,s} = d_{bk,s}$, d.h. die Tastverhältnisse in den beiden Halbbrücken der HF-Gleichrichter 5 sind gleich, wodurch ein DC-Anteil eliminiert werden kann. Alternativ oder zusätzlich kann ein DC-Anteil auch durch Seriekondensatoren eliminiert werden.
- $\alpha_k = (k - 1) 2\pi/m$, d.h. auf der Primärseite wird eine Phasenverschiebung zwischen den $m$ Phasen realisiert;

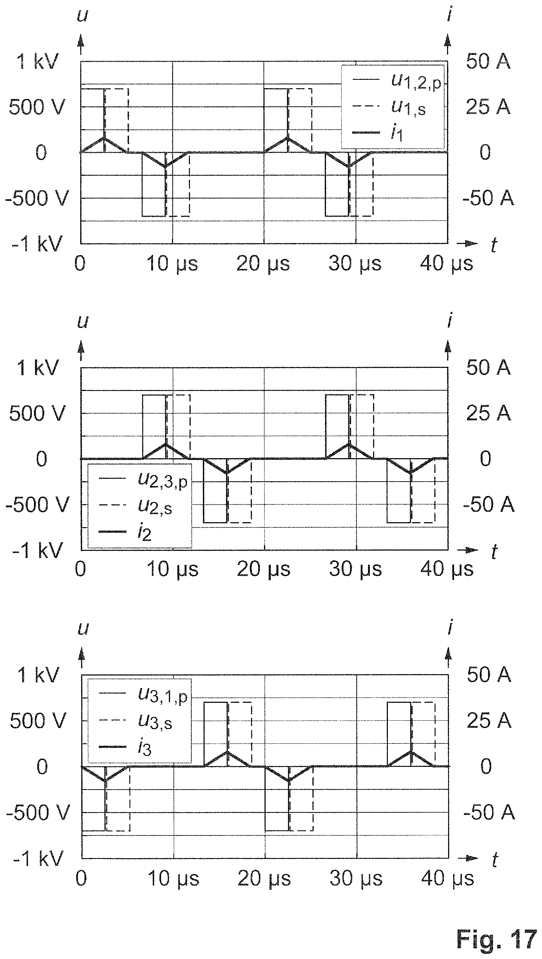

$\beta_{bk} - \beta_{ak} = 2 \pi / m$, d.h. zwischen Spannungspulsen der beiden Halbbrücken der HF-Gleichrichter liegt eine Phasenverschiebung vor. Damit schliesst sich der negative Spannungspuls auf der Sekundärseite (des HF-Gleichrichters) mit der gleichen Verzögerung an einen negativen Spannungspuls der Primärseite (des HF-Wechselrichters) an, wie dies für die positiven Spannungspulse der Fall ist. Dadurch können Verluste reduziert werden (vgl. **Fig. 17**).

Mit der Definition von $\alpha_k$, für $d_{k,p} = d_{1,p}$ und nach der Festlegung von $d_{1,p}$ resultiert folgender Verlauf für die zwischen der ersten und zweiten Eingangsklemme des ersten primärseitigen HF-Netzwerks anliegende Spannung $u_{1,2,p}(t)$:

- $0 < t < d_{1,p} T_s : U_{1,2,p}(t) \approx U_p$ (als Zeitintervall $I_p$ bezeichnet),
- $d_{1,p} T_s < t < T_s / m : u_{1,2,p}(t) \approx 0$ (als Zeitintervall $II_p$ bezeichnet),
- $T_s / m < t < (d_{1,p} + 1 / m) T_s : u_{1,2,p}(t) \approx -U_p$ (als Zeitintervall $III_p$ bezeichnet),
- $(d_{1,p} + 1 / m) T_s < t < T_s : u_{1,2,p}(t) \approx 0$ (als Zeitintervall $IV_p$ bezeichnet).

Die Verläufe der zwischen den ersten und zweiten Eingangsklemmen der restlichen, $k$-ten primärseitigen HF-Netzwerke anliegenden Spannungen sind gleich den Verläufen von $u_{1,2,p}(t - (k - 1) T_s / m)$.

Mit den Definitionen von $\beta_{bk} - \beta_{ak}$ und $d_{ak,s} = d_{bk,s}$ und nach der Festlegung von $\beta_{ak}$ und $d_{ak,s}$ resultiert folgender

Verlauf für die zwischen der ersten und zweiten Ausgangsklemme des $k$-ten sekundärseitigen HF-Netzwerks anliegenden Spannung $u_{1,\mathrm{s}}(t)$ (gilt für $1 \le k \le m$):

- $0 < t - T_\mathrm{s}\,\beta_{ak}\,/\,(2\,\pi) < d_{ak,\mathrm{s}}\,T_\mathrm{s}$: $u_{1,\mathrm{s}}(t) \approx U_\mathrm{s}$ (Zeitintervall $\mathrm{I_s}$),
- $d_{ak,\mathrm{s}}\,T_\mathrm{s} < t - T_\mathrm{s}\,\beta_{ak}\,/\,(2\,\pi) < T_\mathrm{s}\,/\,m$: $u_{1,\mathrm{s}}(t) \approx 0$ (Zeitintervall $\mathrm{II_s}$),
- $T_\mathrm{s}\,/\,m < t - T_\mathrm{s}\,\beta_{ak}\,/\,(2\,\pi) < (d_{ak,\mathrm{s}} + 1\,/\,m)T_\mathrm{s}$: $u_{1,\mathrm{s}}(t) \approx -U_\mathrm{s}$ (Zeitintervall $\mathrm{III_s}$),
- $(d_{ak,\mathrm{s}} + 1\,/m)T_\mathrm{s} < t - T_\mathrm{s}\,\beta_{ak}\,/\,(2\,\pi) < T_\mathrm{s}$: $u_{1,\mathrm{s}}(t) \approx 0$ (Zeitintervall $\mathrm{IV_s}$).

Das vorgestellte Steuerverfahren lässt sich, statt mit

- $0 < d_{1,\mathrm{p}} + d_{ak,\mathrm{s}} < 1\,/\,m$,
- $d_{ak,\mathrm{s}} = d_{bk,\mathrm{s}}$,
- $\beta_{bk} - \beta_{ak} = 2\,\pi\,/\,m$,

in einer ersten Alternative auch mit folgenden Steuerparametern realisieren (es resultiert hier dieselbe sekundärseitige Spannung):

- $0 < d_{1,\mathrm{p}} + (\beta_{bk} - \beta_{ak})\,/\,(2\,\pi) < 1\,/\,m$,
- $d_{ak,\mathrm{s}} = d_{bk,\mathrm{s}} = 1\,/\,m$,

wobei die Freiheitsgrade $\beta_{bk}$ die ursprünglich verfügbaren Freiheitsgrade $d_{ak,\mathrm{s}}$ (zur Steuerung der Ausgangsströme der $m$ sekundärseitigen HF-Gleichrichter) ersetzen. Die erste Alternative hat keine Auswirkung auf die Wahl von $\beta_{ak}$, d.h., je nach Energieflussrichtung, ist wieder $\beta_{ak} = \alpha_{ak} \pm 2\,\pi\,d_{k,\mathrm{p}}$ eine sinnvolle Wahl.

Eine zweite Alternative ist gegeben mit:

- $0 < d_{1,\mathrm{p}} + (\beta_{ak} - \beta_{bk})\,/\,(2\,\pi) < 1\,/\,m$,
- $d_{ak,\mathrm{s}} = d_{bk,\mathrm{s}} = (m - 1)\,/\,m$,

wobei die Freiheitsgrade $\beta_{ak}$ die ursprünglich verfügbaren Freiheitsgrade $d_{ak,\mathrm{s}}$ (zur Steuerung der Ausgangsströme der $m$ sekundärseitigen HF-Gleichrichter) ersetzen. Die zweite Alternative hat daher eine Auswirkung auf die Wahl von $\beta_{ak}$ und je nach Energieflussrichtung ist $\beta_{bk} = \alpha_{ak} + 2\,\pi\,/\,m + 2\,\pi\,d_{k,\mathrm{p}}$ (Speisen elektrischer Energie) bzw. $\beta_{bk} = \alpha_{ak} + 2\,\pi\,/\,m - 2\,\pi\,d_{k,\mathrm{p}}$ (Speisen elektrischer Energie) eine sinnvolle Wahl.

Zur Steuerung der Ausgangsströme der $m$ sekundärseitigen HF-Gleichrichter verbleiben als Freiheitsgrade $d_{1,\mathrm{p}}$, $d_{ak,\mathrm{s}}$, $\beta_{ak}$ und $T_\mathrm{s}$. Diese können beispielsweise im Rahmen einer Optimierungsrechnung, z.B. zur Minimierung der Gesamtverluste des mehrphasigen Gleichspannungskonverters, unter den Nebenbedingungen der geforderten Ausgangsströme der $m$ sekundärseitigen HF-Gleichrichter ermittelt werden. In einer praktischen Umsetzung ist jedoch häufig ein einfaches Verfahren zur Ermittlung der verbleibenden Freiheitsgrade erwünscht. Ein Steuerverfahren für den Betrieb mit geringen Leistungen, geringen Schaltverlusten und reduziertem Berechnungsaufwand lässt sich realisieren, wenn $d_{ak,\mathrm{s}}$ so gewählt wird, dass der Strom in der sekundärseitigen Wicklung des $k$-ten HF-Transformators mit Ablauf der Zeitintervalle $\mathrm{I_s}$ und $\mathrm{III_s}$ den Wert Null erreicht, womit günstige Voraussetzungen zur Erreichung geringer Schaltverluste vorliegen, und $\beta_{ak} = \alpha_{ak} + 2\,\pi\,d_{k,\mathrm{p}}$ gesetzt wird. Mit $\beta_{ak} = \alpha_{ak} + 2\,\pi\,d_{k,\mathrm{p}}$ wird erreicht, dass $u_{1,\mathrm{s}}(t)$ genau dann von Null auf $U_\mathrm{s}$ wechselt, wenn $u_{1,2,\mathrm{p}}(t)$ von $U_\mathrm{p}$ auf Null wechselt und $u_{1,\mathrm{s}}(t)$ genau dann von Null auf $-U_\mathrm{s}$ wechselt, wenn $u_{1,2,\mathrm{p}}(t)$ von $-U_\mathrm{p}$ auf Null wechselt, d.h. das Zeitintervall $\mathrm{I_s}$ folgt unmittelbar auf das Zeitintervall $\mathrm{I_p}$ und das Zeitintervall $\mathrm{III_s}$ folgt unmittelbar auf das Zeitintervall $\mathrm{III_p}$.

**Fig. 16** stellt Beispiele für Verläufe von $d_{k,\mathrm{p}}$ und $d_{ak,\mathrm{p}} = d_{bk,\mathrm{p}}$ für das Steuerverfahren für den Betrieb mit geringen Leistungen, geringen Schaltverlusten und reduziertem Berechnungsaufwand für einen mehrphasigen Gleichspannungskonverter mit $m = 3$ für verschiedene Betriebspunkte dar, unter den Annahmen, dass die primärseitigen HF-Netzwerke durch HF-Kondensatornetzwerke und die sekundärseitigen HF-Netzwerke durch HF-Serienschwingkreisnetzwerke realisiert werden, dass die Induktivität des $k$-ten HF-Serienschwingkreisnetzwerks mit $L_k$ bezeichnet ($1 \le k \le m$) wird und dass die Kapazitäten der Kondensatoren aller HF-Netzwerke so gross gewählt werden, dass diese Kondensatoren nur die Gleichanteile von den HF-Transformatoren fernhalten, aber keine nennenswerten Einflüsse auf die Stromverläufe in den Wicklungen der HF-Transformatoren haben. Für $1 \le k \le m$ gilt: die Verläufe von $d_{k,\mathrm{p}}$ und $d_{ak,\mathrm{p}}$ sind in Abhängigkeit des Ausgangsstromes des $k$-ten sekundärseitigen HF-Gleichrichters und für verschiedene

Werte von $U_{1,\mathrm{s}} = \{525\ \mathrm{V},\ 700\ \mathrm{V},\ 1050\ \mathrm{V}\}$ und gleich grosse Spannungen an den potentialgetrennten Gleichspannungsanschlüssen, $U_{k,\mathrm{s}} = U_{1,\mathrm{s}}$, dargestellt. Die für die Ermittlung der in **Fig. 16** abgebildeten Verläufe gewählten Betriebspunkte sind ausserdem charakterisiert durch $n_1 = n_2 = n_3 = 1$, $L_1 = L_2 = L_3 = 222\ \mu\mathrm{H}$, $U_\mathrm{p} = 700\ \mathrm{V}$ und $T_\mathrm{s} = 20\ \mu\mathrm{s}$, d.h. zur Vereinfachung der Darstellung wurde eine konstante Schaltperiode gewählt. Als Ergebnis resultieren für einen monoton ansteigenden Ausgangsstrom des $k$-ten Gleichspannungskonverters und einen konstanten Wert für $U_{k,\mathrm{s}}$

monoton ansteigende Tastverhältnisse $d_{k,p}$ und $d_{ak,p}$. Für einen konstanten Ausgangsstrom des $k$-ten Gleichspannungskonverters und ein monoton ansteigendes $U_{k,s}$ des $k$-ten Gleichspannungskonverters resultiert ein monotones Ansteigen des Tastverhältnisses $d_{k,p}$ und ein monotones Abfallen des Tastverhältnisses $d_{ak,p}$. Der maximale Ausgangsstrom des $k$-ten Gleichspannungskonverters liegt für $d_{1,p} + d_{ak,s} = 1 / m$ vor, d.h. an der Betriebsgrenze des Steuerverfahren für den Betrieb mit geringen Leistungen, geringen Schaltverlusten und reduziertem Berechnungsaufwand.

Fig. 17 zeigt simulierte Spannungs- und Stromverläufe für 1 A Ausgangsstrom (je HF-Gleichrichter) für $m = 3$, $U_{1,s} = u_{2,s} = U_{3,s} = 700$ V, $0 < d_{k,p} + d_{ak,p} < 1 / m$, $d_{k,p} = d_{1,p}$, $d_{ak,s} = d_{bk,s}$, $\alpha_k = (k - 1)\, 2\pi/m$ und $\beta_{bk} - \beta_{ak} = 2\pi / m$. Dargestellte Verläufe in (a), (b) und (c): oben: $u_{1,2,p}$, $u_{1,s}$ und Strom durch $L_1$; Mitte: $u_{2,3,p}$, $u_{2,s}$ und Strom durch $L_2$; unten: $u_{3,1,p}$, $u_{3,s}$ und Strom durch $L_3$. Gewählte Kenndaten: $n_1 = n_2 = n_3 = 1$, $L_1 = L_2 = L_3 = 222\ \mu$H, $T_s = 20\ \mu$s.

Dieses Verfahren kann auch zum Rückspeisen elektrischer Energie verwendet werden und zwar für $\beta_{ak} < \alpha_{ak}$. Günstige Voraussetzungen zur Erreichung geringer Schaltverluste liegen vor, wenn $\beta_{ak} = \alpha_{ak} - 2\pi\, d_{ak,s}$ gesetzt wird. Mit $\beta_{ak} = \alpha_{ak} - 2\pi\, d_{ak,s}$ wird erreicht, dass $u_{1,2,p}(t)$ genau dann von Null auf $U_p$ wechselt, wenn $u_{1,s}(t)$ von $U_s$ auf Null wechselt und $u_{1,2,p}(t)$ genau dann von Null auf $-U_p$ wechselt, wenn $u_{1,s}(t)$ von $-U_s$ auf Null wechselt (und sinngemäss auch für alle anderen Phasen), d.h. das Zeitintervall I$_p$ folgt unmittelbar auf das Zeitintervall I$_s$ und das Zeitintervall III$_p$ folgt unmittelbar auf das Zeitintervall III$_s$.

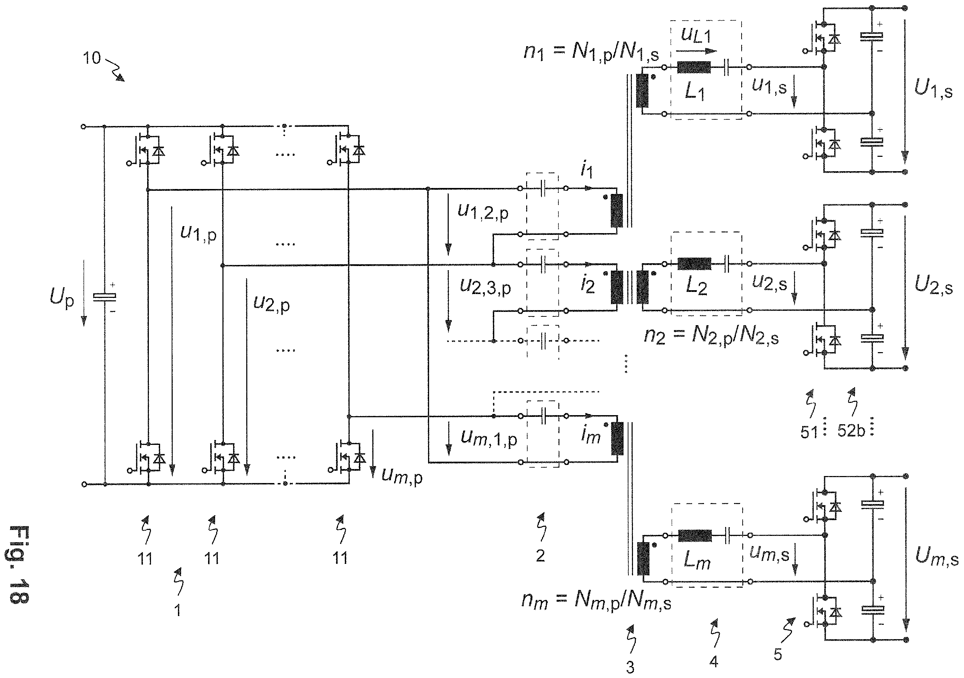

Fig. 18 zeigt einen mehrphasigen Gleichspannungshalbbrückenkonverter, welcher vorsieht, dass die Leistungsschalter aller zweiten Halbbrücken der $m$ HF-Gleichrichter des mehrphasigen Gleichspannungskonverters durch Kondensatoren ersetzt sind. Als Vorteil entfällt beim mehrphasigen Gleichspannungshalbbrückenkonverter der von den ersetzten Leistungsschaltern im mehrphasigen Gleichspannungskonverter verursachte Mehraufwand (Kosten, zusätzliche Schaltungsaufwand für die Ansteuerung). Ausserdem können die ausgangsseitigen Zwischenkreiskondensatoren des mehrphasigen Gleichspannungskonverters entfallen. Je nach Umständen nachteilig kann eine Reduktion von 9 $m$ auf 6 $m$ Freiheitsgrade der Ansteuerung sein, da die Aktivierungssignale, die Tastverhältnisse und die Phasenbeziehungen $\beta_{bk}$ für die zweiten Halbbrücken der $m$ HF-Gleichrichter entfallen.

Bei geeigneter Wahl der primär- und sekundärseitigen HF-Netzwerke und geeigneter Wahl der Windungszahlen der Primärwicklungen der HF-Transformatoren verschwindet die Summe der zeitlichen Verläufe aller magnetischen Flüsse in den $m$ HF-Transformatoren zu jedem Zeitpunkt. Diese Eigenschaft lässt sich auch mit den im Folgenden beschriebenen Realisierungsvarianten des mehrphasigen Gleichspannungshalbbrückenkonverter realisieren (Ausführung eines mehrphasigen Gleichspannungshalbbrückenkonverters mit primärseitiger Sternschaltung, eines mehrphasigen Gleichspannungshalbbrückenkonverters mit primärseitiger Sternschaltung und sekundärseitiger Zick-Zack-Schaltung und eines mehrphasigen umschaltbaren Gleichspannungshalbbrückenkonverters) und ermöglicht das Ersetzen der $m$ HF-Transformatoren durch einen Mehrphasen-HF-Transformator mit $m$ Phasen, wie ebenfalls im Folgenden beschrieben.

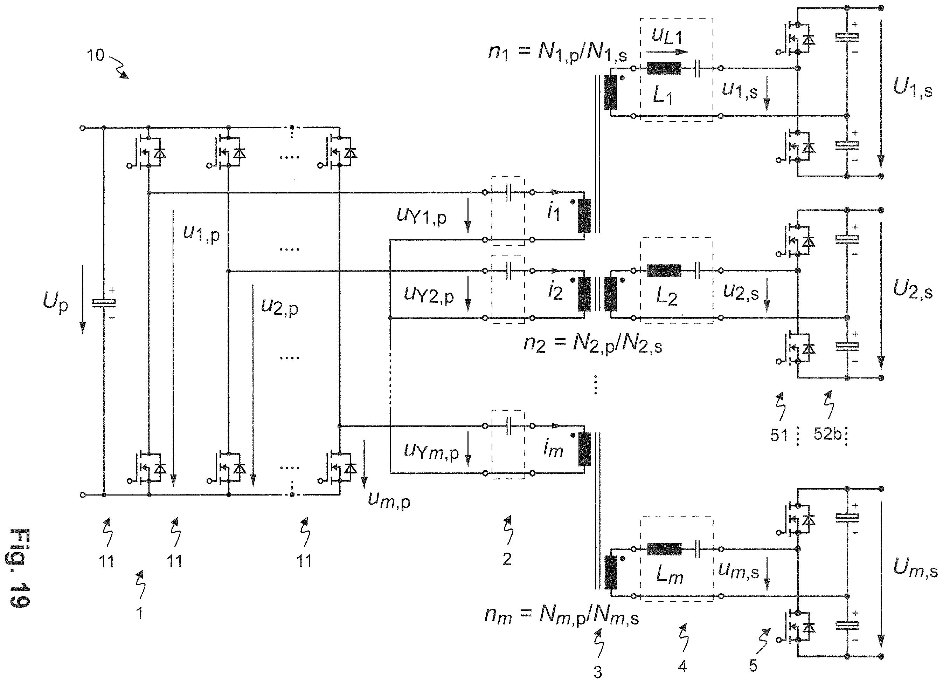

Fig. 19 zeigt eine Ausführungform des mehrphasigen Gleichspannungshalbbrückenkonverters mit primärseitiger Sternschaltung. Diese sieht, im Vergleich zum mehrphasigen Gleichspannungshalbbrückenkonverter aus Fig. 18, veränderte Verbindungen der primärseitigen HF-Netzwerke vor. Für den mehrphasigen Gleichspannungshalbbrückenkonverter mit primärseitiger Sternschaltung gilt, für $1 \le k \le m$:

- die erste Eingangsklemme des $k$-ten primärseitigen HF-Netzwerks ist mit dem Schaltspannungsanschluss der $k$-ten Halbbrücke des HF-Wechselrichters verbunden.

- die zweite Eingangsklemme des ersten primärseitigen HF-Netzwerks ist mit allen zweiten Eingangsklemmen der $k$-ten primärseitigen HF-Netzwerke verbunden.

Durch diese Verbindungsänderungen resultieren geringere Spannungen zwischen den ersten und zweiten Eingangsklemmen der HF-Netzwerke, was, je nach gegebenen Anforderungen, im Vergleich zum mehrphasigen Gleichspannungshalbbrückenkonverter aus Fig. 18 einen praktischen Vorteil bedeuten kann. Die primärseitige Verschaltung des mehrphasigen Gleichspannungshalbbrückenkonverters mit primärseitiger Sternschaltung kann mit den verschiedenen hier gezeigten Realisierungen der Sekundärseite des mehrphasigen Gleichspannungskonverters kombiniert werden.

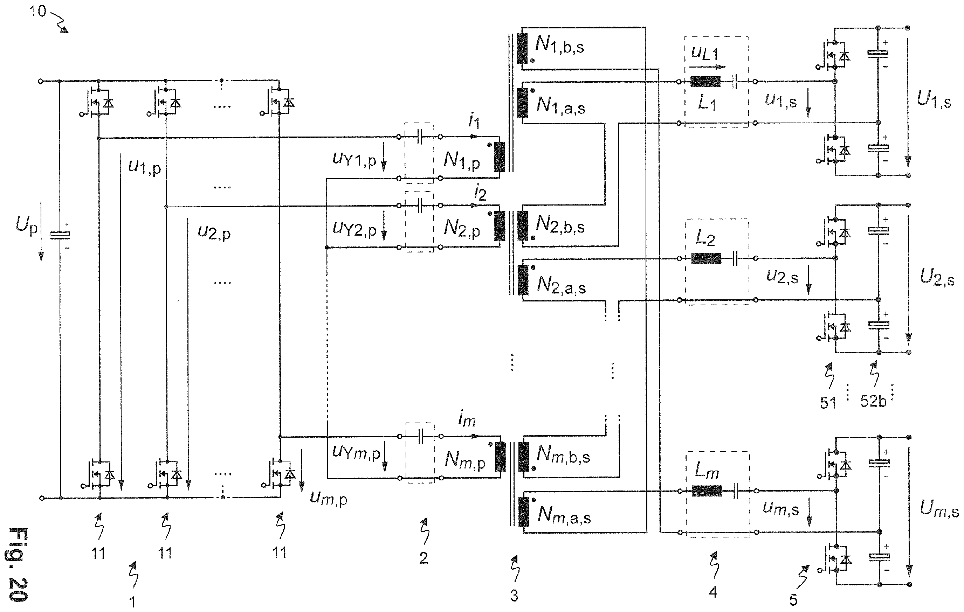

Fig. 20 zeigt eine Ausführungsform des mehrphasigen Gleichspannungshalbbrückenkonverters mit primärseitiger Sternschaltung und sekundärseitiger Zick-Zack-Schaltung. Diese sieht, im Vergleich zum mehrphasigen Gleichspannungshalbbrückenkonverter mit primärseitiger Sternschaltung aus Fig. 19, HF-Transformatoren mit zwei Sekundärwicklungen, jede Sekundärwicklung aufweisend zwei Transformatoranschlüsse, und veränderte Verbindungen zwischen den Sekundärwicklungen der HF-Transformatoren mit zwei Sekundärwicklungen und den Eingangsklemmen der sekundärseitigen HF-Netzwerke vor. Die Wicklungssinne der Wicklungen der HF-Transformatoren mit zwei Sekundärwicklungen sind wie folgt definiert: liegt vom ersten zum zweiten Transformatoranschluss der primärseitigen Wicklung des HF-Transformators mit zwei Sekundärwicklungen eine positive Spannung an, dann liegen vom ersten zum zweiten Transformatoranschluss der ersten Sekundärwicklung des HF-Transformators mit zwei Sekundärwicklungen wie auch vom ersten zum zweiten Transformatoranschluss der zweiten Sekundärwicklung des HF-Transformators mit zwei Sekundärwicklungen positive Spannungen an. Für $1 \leq k \leq m$ gilt: das Übersetzungsverhältnis des $k$-ten HF-Transformators mit zwei Sekundärwicklungen ($n_k$) ist definiert als das Verhältnis der Windungszahl der Primärwicklung ($N_{k,p}$) zur Windungszahl der ersten Sekundärwicklung ($N_{k,a,s}$) des $k$-ten HF-Transformators mit zwei Sekundärwicklungen: $n_k = N_{k,p} / N_{k,a,s}$. Für den mehrphasigen Gleichspannungshalbbrückenkonverter mit primärseitiger Sternschaltung und sekundärseitiger Zick-Zack-Schaltung gilt für $1 \leq k < m$: der erste Transformatoranschluss der ersten Sekundärwicklung des $k$-ten HF-Transformators mit zwei Sekundärwicklungen ist mit der ersten Eingangsklemme des $k$-ten sekundärseitigen HF-Netzwerks verbunden, der zweite Transformatoranschluss der ersten Sekundärwicklung des $k$-ten HF-Transformators mit zwei Sekundärwicklungen ist mit dem zweiten Transformatoranschluss der zweiten Sekundärwicklung des ($k$+1)-ten HF-Transformators mit zwei Sekundärwicklungen verbunden und der erste Transformatoranschluss der zweiten Sekundärwicklung des ($k$+1)-ten HF-Transformators mit zwei Sekundärwicklungen ist mit der zweiten Eingangsklemme des $k$-ten sekundärseitigen HF-Netzwerks verbunden. Des Weiteren ist der erste Transformatoranschluss der ersten Sekundärwicklung des $m$-ten HF-Transformators mit zwei Sekundärwicklungen mit der ersten Eingangsklemme des $m$-ten sekundärseitigen HF-Netzwerks verbunden, der zweite Transformatoranschluss der ersten Sekundärwicklung des $m$-ten HF-Transformators mit zwei Sekundärwicklungen ist mit dem zweiten Transformatoranschluss der zweiten Sekundärwicklung des ersten HF-Transformators mit zwei Sekundärwicklungen verbunden und der erste Transformatoranschluss der zweiten Sekundärwicklung des ersten HF-Transformators mit zwei Sekundärwicklungen ist mit der zweiten Eingangsklemme des $m$-ten sekundärseitigen HF-Netzwerks verbunden. Die Windungszahl der zweiten Sekundärwicklung des $k$-ten HF-Transformators mit zwei Sekundärwicklungen ($N_{k,b,s}$) ist geeignet zu wählen, z.B. $N_{k,b,s} = N_{k,p} / n_{k-1}$ für $1 < k \leq m$ bzw. $N_{1,b,s} = N_{1,p} / n_m$.

Im Vergleich zum mehrphasigen Gleichspannungshalbbrückenkonverter mit primärseitiger Sternschaltung aus **Fig. 19** hat der mehrphasige Gleichspannungshalbbrückenkonverter mit primärseitiger Sternschaltung und sekundärseitiger Zick-Zack-Schaltung aus **Fig. 20** den Vorteil, dass diese Schaltung auch bei unsymmetrischer Belastung technisch sinnvoll eingesetzt werden kann, welche z.B. dann vorliegt, wenn sich die an den potentialgetrennten Gleichspannungsanschlüssen abgegebenen oder aufgenommenen elektrischen Leistungen sehr unterscheiden.

Die $m$ HF-Gleichrichter des mehrphasigen Gleichspannungshalbbrückenkonverters mit primärseitiger Sternschaltung und sekundärseitiger Zick-Zack-Schaltung können auch durch die $m$ HF-Gleichrichter des mehrphasigen Gleichspannungskonverters aus **Fig. 1** ersetzt werden.

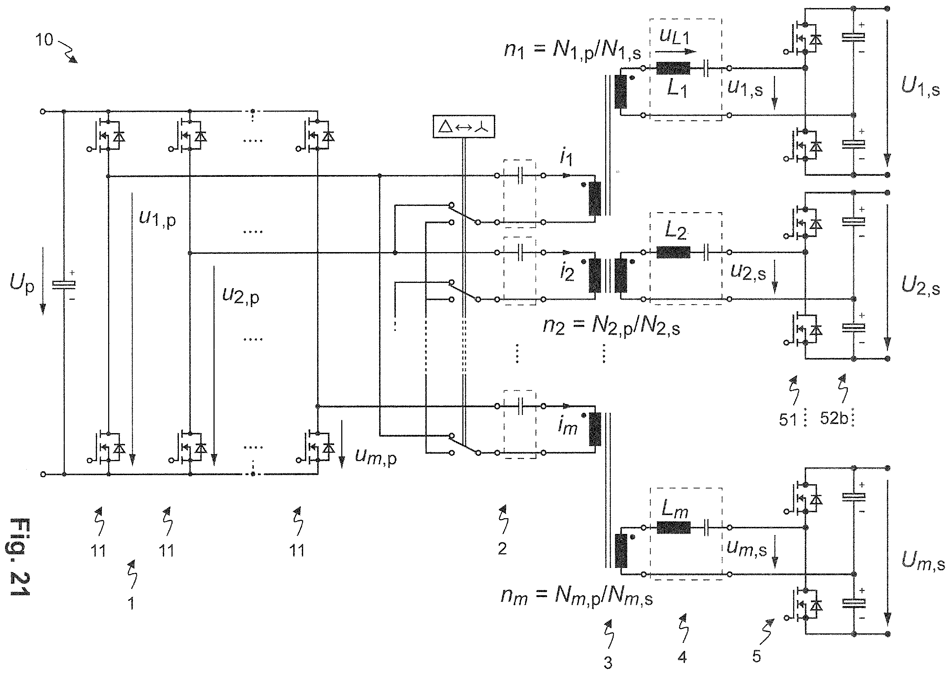

**Fig. 21** zeigt eine Ausführungform des mehrphasigen umschaltbaren Gleichspannungshalbbrückenkonverters, welche im Vergleich zum mehrphasigen Gleichspannungshalbbrückenkonverter aus **Fig. 18,** zwischen dem HF-Wechselrichter und den primärseitigen HF-Netzwerken ein Relais aufweist, Das Relais weist auf: eine Steuerspule und $m$ Wechselschalter aufweisend drei Kontakte (Hauptkontakt, erster Wechselkontakt, zweiter Wechselkontakt). Für $1 \leq k \leq m$ gilt: bei nicht magnetisierter Steuerspule ist der Hauptkontakt des $k$-ten Wechselschalters mit dem ersten Wechselkontakt des $k$-ten Wechselschalters verbunden und bei magnetisierter Steuerspule ist der Hauptkontakt des $k$-ten Wechselschalters mit dem zweiten Wechselkontakt des $k$-ten Wechselschalters verbunden. Der mehrphasige umschaltbare Gleichspannungshalbbrückenkonverter ist in weiten Teilen identisch zum mehrphasigen Gleichspannungshalbbrückenkonverter aus **Fig. 18,** einzig die Verbindungen zwischen dem HF-Wechselrichter und den primärseitigen HF-Netzwerken ändern sich, wie im Folgenden beschrieben und in **Fig. 21** dargestellt. Für $1 \leq k < m$ gilt: der Schaltspannungsanschluss der $k$-ten Halbbrücke des HF-Wechselrichters ist mit der ersten Eingangsklemme des $k$-ten primärseitigen HF-Netzwerks verbunden, der Hauptkontakt des $k$-ten Wechselschalters ist mit der zweiten Eingangsklemme des $k$-ten primärseitigen HF-Netzwerks verbunden und der erste Wechselkontakt des $k$-ten Wechselschalters ist mit dem Schaltspannungsanschluss der ($k$+1)-ten Halbbrücke des HF-Wechselrichters verbunden. Der Schaltspannungsanschluss der $m$-ten Halbbrücke des HF-Wechselrichters ist mit der ersten Eingangsklemme des $m$-ten primärseitigen HF-Netzwerks verbunden, der Hauptkontakt des $m$-ten Wechselschalters ist mit der zweiten Eingangsklemme des $m$-ten primärseitigen HF-Netzwerks verbunden und der erste Wechselkontakt des $m$-ten Wechselschalters ist mit dem Schaltspannungsanschluss der ersten Halbbrücke des HF-Wechselrichters verbunden. Die zweiten Wechselkontakte aller $m$ Wechselschalter sind miteinander verbunden.

Der mehrphasige umschaltbare Gleichspannungshalbbrückenkonverter realisiert daher zwei verschiedene Schaltungen, je nachdem ob die Steuerspule magnetisiert ist oder nicht:

- Nicht magnetisierte Steuerspule: mehrphasiger Gleichspannungshalbbrückenkonverter nach **Fig. 18**
- Magnetisierte Steuerspule: mehrphasiger Gleichspannungshalbbrückenkonverter mit primärseitiger Sternschaltung nach **Fig. 19**

Die $m$ HF-Gleichrichter des mehrphasigen umschaltbaren Gleichspannungshalbbrückenkonverters können auch durch die $m$ HF-Gleichrichter des mehrphasigen Gleichspannungskonverters aus **Fig. 1** ersetzt werden.

Der mehrphasige umschaltbare Gleichspannungshalbbrückenkonverter kann - unter Verwendung von HF-Transformatoren mit zwei Sekundärwicklungen - auch mit sekundärseitiger Zick-Zack-Schaltung gemäss **Fig. 20** ausgeführt werden.

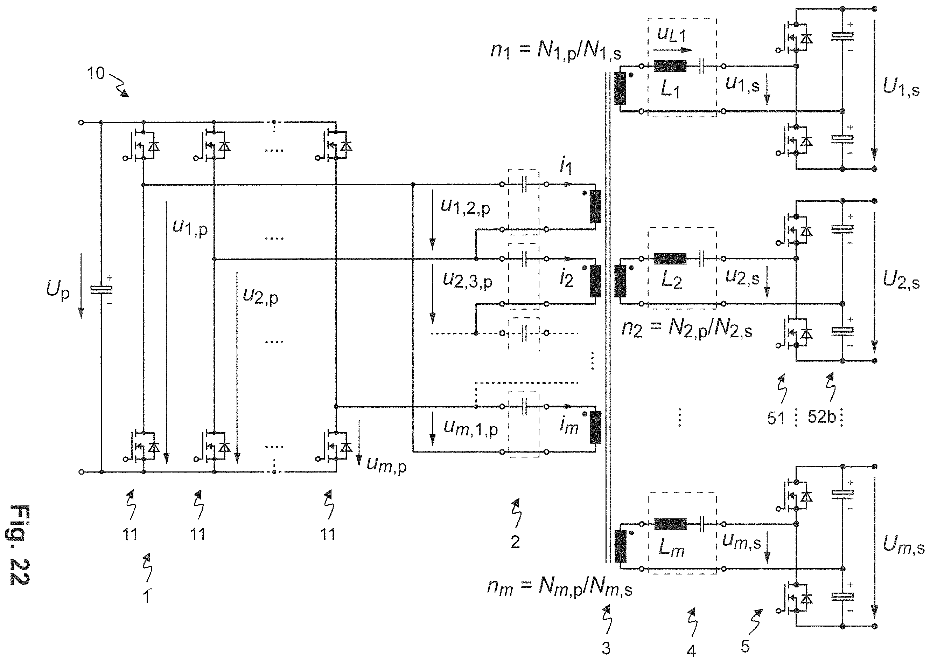

**Fig. 22** zeigt eine Ausführungsform des mehrphasigen Gleichspannungshalbbrückenkonverters mit Mehrphasen-HF-Transformator. Diese sieht anstelle der $m$ HF-Transformatoren des mehrphasigen Gleichspannungshalbbrückenkonverter aus **Fig. 18** einen Mehrphasen-HF-Transformator mit $m$ Phasen vor. Der Mehrphasen-HF-Transformator mit $m$ Phasen kann unter Verwendung eines Magnetkerns aufweisend $k$ Schenkel, die über Joche miteinander magnetisch verbunden sind, realisiert sein. Für $1 \le k \le m$ gilt: der $k$-te Schenkel ist mit einem Wicklungspaket aufweisend eine primärseitige Wicklung mit der Windungszahl $N_p$ und eine sekundärseitige Wicklung mit der Windungszahl $N_{s,k}$ bewickelt. Der Mehrphasen-HF-Transformator verfügt über keinen magnetischen Rückschluss und der technische Vorteil des Mehrphasen-HF-Transformators liegt entsprechend darin, dass das gesamte Kernvolumen eines Mehrphasen-HF-Transformator mit $m$ Phasen geringer ist als die Summe aller Kernvolumina von $m$ HF-Transformatoren (geringere Baugrösse und Kosten). Die sinnvolle technische Verwendung setzt jedoch voraus, dass die Summe der zeitlichen Verläufe aller magnetischen Flüsse in den $m$ Schenkeln zu jedem Zeitpunkt verschwindet. Bei geeigneter Wahl der primär- und sekundärseitigen HF-Netzwerke und geeigneter Wahl der Windungszahlen der Primär- und Sekundärwicklungen der HF-Transformatoren (bzw. der HF-Transformatoren mit zwei Sekundärwicklungen) ist diese Bedingung für alle erläuterten sowie durch Schaltungskombinationen resultierenden Varianten des mehrphasigen Gleichspannungshalbbrückenkonverter und des mehrphasigen Gleichspannungskonverters gegeben:

- dem mehrphasigen Gleichspannungshalbbrückenkonverter aus **Fig. 18,**

- dem mehrphasigen Gleichspannungskonverter mit primärseitiger Sternschaltung aus **Fig. 19,**

- dem mehrphasigen Gleichspannungskonverter mit primärseitiger Sternschaltung und sekundärseitiger Zick-Zack-Schaltung aus **Fig. 20,**

- dem mehrphasigen umschaltbaren Gleichspannungskonverter aus **Fig. 21** und

- dem mehrphasigen Gleichspannungskonverter aus **Fig. 1,**

- Schaltungsvarianten, die sich durch geeignete Kombinationen der in den **Figuren 1, 18, 19, 20** und **21** dargestellten Schaltungen entwickeln lassen.

Ein Beispiel für eine geeignete Wahl der primär- und sekundärseitigen HF-Netzwerke ist die Wahl von HF-Kondensatornetzwerken als primärseitige HF-Netzwerke, die Wahl von HF-Serienschwingkreisnetzwerken als sekundärseitige HF-Netzwerke und die Wahl von ausreichend hohen Kapazitätswerten in allen HF-Netzwerken, sodass die über den Kondensatoren der HF-Netzwerke anliegenden Spannungen keinen nennenswerten Einfluss auf die an den primär- und sekundärseitigen Wicklungen anliegenden Spannungen haben.

Je nach Ausgestaltung der primär- und/oder sekundärseitigen HF-Netzwerke ist, unter Verwendung von Resonanzkreisen mit einer oder mehreren Serien- und/oder Parallelresonanzfrequenzen, die Realisierung eines mehrphasigen Resonanzgleichspannungskonverters möglich. Jede Phase des mehrphasigen Resonanzgleichspannungskonverters ermöglicht dieselben Betriebsarten wie auch ein Resonanzkonverter (z.B. Half-Cycle Discontinuous-Conduction-Mode Series-Resonant-Converter), mit den für den mehrphasigen Gleichspannungskonverter beschriebenen 9 m Freiheitsgraden.

Der Ansatz, durch Einbeziehen aller Freiheitsgrade der Ansteuerung Steuerverfahren zu entwickeln die eine Verbesserung des Betriebs des betrachteten mehrphasigen Gleichspannungskonverters erreichen, lässt sich sinngemäss auf alle erläuterten sowie durch Schaltungskombinationen resultierenden Varianten des mehrphasige Gleichspannungskonverters anwenden. Des Weiteren lassen sich die oben erläuterten Ausführungen des Steuerverfahrens (für minimale Leitverluste des mehrphasigen Gleichspannungskonverters, für das Hochfahren des mehrphasigen Gleichspannungskonverters mit begrenztem Ausgangsstrom und für den Betrieb mit geringen Leistungen an den potentialgetrennten Gleichspannungsanschlüssen des mehrphasigen Gleichspannungskonverters) sinngemäss auf alle erläuterten sowie durch Schaltungskombinationen resultierenden Varianten des mehrphasige Gleichspannungskonverters anwenden.

**Patentansprüche**

1. Mehrphasiger, potentialgetrennter Gleichspannungskonverter (10), zum Austausch elektrischer Energie zwischen einem primärseitigen Gleichspannungsanschluss und $m$ sekundärseitigen potentialgetrennten Gleichspannungsanschlüssen, aufweisend die folgenden Untereinheiten

• einen HF-Wechselrichter (1);
• daran angeschlossen $m$ primärseitige HF-Netzwerke (2);
• daran angeschlossen $m$ primärseitige Wicklungen einer HF-Transformatoranordnung (3);
• sekundärseitige Wicklungen der HF-Transformatoranordnung (3);
• daran angeschlossen $m$ sekundärseitige HF-Netzwerke (4);
• daran angeschlossen $m$ HF-Gleichrichter (5);

und mit einer Steuerung der Untereinheiten, welche dazu ausgelegt ist, Steuerparameter, entsprechend Freiheitsgraden der Steuerung, zu bestimmen und im Betrieb des Gleichspannungskonverters (10) an einen Betriebszustand des Gleichspannungskonverters (10) anzupassen, wobei die derart im Betrieb anpassbare Steuerparameter mindestens umfassen, für $1 \leq k \leq m$:

$d_{k,\mathrm{p}}$ Tastverhältnis des Steuersignals der k-ten Halbbrücke des HF-Wechselrichters;
$d_{ak,\mathrm{s}}$ Tastverhältnis des Steuersignals der ersten Halbbrücke des $k$-ten HF-Gleichrichters;
$d_{bk,\mathrm{s}}$ Tastverhältnis des Steuersignals der zweiten Halbbrücke des $k$-ten HF-Gleichrichters;
$\alpha_k$ Phasenwinkel zwischen der steigenden Flanke des Steuersignales der ersten Halbbrücke des HF-Wechselrichters und der $k$-ten Halbbrücke des HF-Wechselrichters;
$\beta_{ak}$ Phasenwinkel zwischen der steigenden Flanke des Steuersignals der ersten Halbbrücke des HF-Wechselrichters ($s1$,p) und der steigenden Flanke des Steuersignals der ersten Halbbrücke des $k$-ten HF-Gleichrichters ($S_{ak,\mathrm{s}}$);
$\beta_{bk}$ Phasenwinkel zwischen der steigenden Flanke des Steuersignals $s_{1,\mathrm{p}}$ und der steigenden Flanke des Steuersignals der zweiten Halbbrücke des $k$-ten HF-Gleichrichters ($S_{bk,\mathrm{s}}$).

2. Gleichspannungskonverter (10) gemäss Anspruch 1, wobei die im Betrieb anpassbaren Steuerparameter zusätzlich mindestens einen umfassen von
$T_\mathrm{s}$ Schaltperiode;
Aktivierungssignale der Halbbrücken.

3. Gleichspannungskonverter (10) gemäss Anspruch 1 oder 2, wobei die Steuerung dazu ausgelegt ist, zur Minimierung von Leitverlusten

• in einem stationären Betrieb alle Halbbrücken mit einem Tastverhältnis von 50% zu betreiben;
• alle Halbbrücken zu aktivieren;
• die Phasenwinkel $\alpha_\mathrm{k}$, $\beta_{a\mathrm{k}}$, $\beta_{b\mathrm{k}}$ zur mindestens annähernden Minimierung des Optimierungskriteriums

$$\mathrm{f} = \min\left(\textstyle\sum_{k=1}^{m} R_k I_{k,\mathrm{p}}^2\right)$$

zu bestimmen, wobei $I_{k,\mathrm{p}}$ den Effektivwert des Stroms in der primärseitigen Wicklung des $k$-ten HF-Transformators und $R_k$ einen entsprechenden Ersatzwiderstand repräsentiert.

4. Gleichspannungskonverter (10) gemäss Anspruch 3, mit $m$ = 3 sekundärseitigen potentialgetrennten Gleichspannungsanschlüssen, wobei die Steuerung, bei symmetrischer Belastung der sekundärseitigen Gleichspannungsanschlüsse mit einer Leistung $P$, dazu ausgelegt ist,
die Phasenwinkel $\alpha1 = 0$, $\alpha2 = 2\pi/3$, $\alpha3 = 4\pi/3$ zu setzen, und
erste Phasenwinkeldifferenzen $\beta_{a1} - \alpha_1 = \beta_{a2} - \alpha_2 = \beta_{a3} - \alpha_3$ zu setzen, und
zweite Phasenwinkeldifferenzen $\beta_{b1} - \beta_{a1} = \beta_{b2} - \beta_{a2} = \beta_{b3} - \beta_{a3}$ zu setzen,
und insbesondere,
die Phasenwinkeldifferenzen in Abhängigkeit des Verhältnisses der Leistung $P$ zu einer maximalen Leistung $P_{max}$ anzupassen, indem

• für $P$ zwischen Null und $P_{max}/2$ die erste Phasenwinkeldifferenz von Null ansteigt und wieder zu Null abfällt, und die zweite Phasenwinkeldifferenz monoton von $2\pi/3$ auf $\pi$ ansteigt; und
• für $P$ zwischen $P_{max}/2$ und $P_{max}$ die erste Phasenwinkeldifferenz monoton von Null auf $\pi/3$ ansteigt, und die zweite Phasenwinkeldifferenz konstant bei $\pi$ verbleibt.

5. Gleichspannungskonverter (10) gemäss Anspruch 4, wobei die Phasenwinkel und Phasenwinkeldifferenzen gemäss **Tabelle 1** verlaufen.

6. Gleichspannungskonverter (10) gemäss Anspruch 3, 4 oder 5 mit $m$ = 3 sekundärseitigen potentialgetrennten Gleichspannungsanschlüssen, wobei die Steuerung dazu ausgelegt ist, bei asymmetrischer Belastung der sekundärseitigen Gleichspannungsanschlüsse mit Leistungen $P_{1,s}$, $P_{2,s}$ und $P_{3,s}$ sowie für verschiedene Spannungen $U_{1,s}$, $U_{2,s}$ und $U_{3,s}$ an den sekundärseitigen Gleichspannungsanschlüssen die Phasenwinkel und die Phasenwinkeldifferenzen gemäss **Tabelle 2** anzupassen.

**7.** Gleichspannungskonverter (10) gemäss einem der vorangehenden Ansprüche, wobei die Steuerung dazu ausgelegt ist, in einem Betriebsmodus zum Hochfahren des Gleichspannungskonverters die Steuerparameter wie folgt zu setzen, wobei $1 \leq k \leq m$:

- Aktivierung aller Halbbrücken (11) des HF-Wechselrichters (1);
- Deaktivierung aller Halbbrücken (51, 52) der HF-Gleichrichter (5);

und mindestens eine der folgenden drei Gruppen von Bedingungen erfüllt ist:

- $d_{k,p} \neq 50\%$ und optional auch $d_{k,p} = d_{1,p}$;

- $\sum_{k=1}^{m} d_{k,p} < 1$ oder $\sum_{k=1}^{m} d_{k,p} > m - 1$;

- $0 < d_{k,p} < 1 / m$ oder $(m - 1) / m < d_{k,p} < 1$, und optional auch $d_{k,p} = d_{1,p}$.

**8.** Gleichspannungskonverter (10) gemäss Anspruch 7, wobei jeweils zur Steuerung eines Ausgangsstroms eines $k$-ten sekundärseitigen HF-Gleichrichters das Tastverhältnis $d_{k,p}$ angepasst wird.

**9.** Gleichspannungskonverter (10) gemäss einem der vorangehenden Ansprüche, wobei die Steuerung dazu ausgelegt ist, bei einem Betrieb mit kleinen Leistungen die Steuerparameter wie folgt zu setzen, wobei $1 \leq k \leq m$:

- Aktivierung aller Halbbrücken des HF-Wechselrichters (1) und der HF-Gleichrichter (5);
- $d_{k,p} \neq 50\%$;

und insbesondere mindestens eine der folgenden drei Gruppen von Bedingungen erfüllt ist:

- $\sum_{k=1}^{m} d_{k,p} < 1$ oder $\sum_{k=1}^{m} d_{k,p} > m - 1$;
- $0 < d_{k,p} < 1 / m$ oder $(m - 1) / m < d_{k,p} < 1$;
- $0 < d_{k,p} + d_{ak,s} < 1 / m$.

**10.** Gleichspannungskonverter (10) gemäss Anspruch 9, wobei die Steuerung dazu ausgelegt ist, bei einem Betrieb mit kleinen Leistungen einen oder mehreren der weiteren Steuerparameter wie folgt zu setzen, wobei $1 \leq k \leq m$:

- $d_{k,p} = d_{1,p}$;
- $da_{k,s} = d_{bk,s}$;
- $\alpha_k = (k - 1) 2\pi/m)$;
- $\beta_{bk} - \beta_{ak} = 2 \pi / m$.

**11.** Gleichspannungskonverter (10) gemäss einem der vorangehenden Ansprüche, wobei die Steuerung dazu ausgelegt ist, bei einem Betrieb mit kleinen Leistungen die Steuerparameter wie folgt gemäss einer der drei folgenden Varianten zu setzen, wobei $1 \leq k \leq m$:

erste Variante:

- $0 < d_{1,p} + d_{ak,s} < 1 / m$,
- $d_{ak,s} = d_{bk,s}$,
- $\beta_{bk} - \beta_{ak} = 2 \pi / m$,

zweite Variante:

- $0 < d_{1,p} + (\beta_{bk} - \beta_{ak}) / (2 \pi) < 1 / m$,
- $da_{k,s} = d_{bk,s} = 1 / m$,

dritte Variante:

- $0 < d_{1,\text{p}} + (\beta_{a k} - \beta_{b k}) / (2\,\pi) < 1 / m,$
- $d_{a k,\text{s}} = d_{b k,\text{s}} = (m - 1) / m.$

12. Gleichspannungskonverter (10) gemäss einem der vorangehenden Ansprüche, in welchem die HF-Gleichrichter (5) jeweils eine erste Halbbrücke (51) mit Leistungsschaltern aufweisen, und eine zweite Halbbrücke (52b) mit Kondensatoren aufweisen.

13. Gleichspannungskonverter (10) gemäss einem der vorangehenden Ansprüche, wobei die HF-Transformatoranordnung (3) $m$ einzelne HF-Transformatoren aufweist, und insbesondere primärseitige Wicklungen dieser HF-Transformatoren eine Dreieckschaltung oder ein Sternschaltung bilden oder zwischen einer Stern- und Dreieckschaltung umschaltbar sind.

14. Gleichspannungskonverter (10) gemäss Anspruch 13, wobei die HF-Transformatoren jeweils zwei Sekundärwicklungen aufweisen, und die Sekundärwicklungen aller HF-Transformatoren eine Zick-Zack-Schaltung bilden.

15. Gleichspannungskonverter (10) gemäss einem der Ansprüche 1 bis 12, wobei die HF-Transformatoranordnung einen Mehrphasen-HF-Transformator mit $m$ Phasen aufweist.

Fig. 1

Fig. 2

$s_{ak,s}$

$\beta_{ak}/(2\pi)$   $d_{ak,s}$

1

0                                      1                $t / T_s$

$s_{bk,s}$ $\beta_{bk}/(2\pi)$          $d_{bk,s}$

1

(a)      0                                 1            $t / T_s$

$u_{k,s} = U_{k,s}\, u_{ak,s} - U_{k,s}\, u_{bk,s}$

$U_{k,s}$

0                                      1                $t / T_s$

(b)      $-U_{k,s}$

## Fig. 3

Fig. 4

Fig. 5

Fig. 6

Fig. 7

Fig.8

Fig. 9

Fig. 10

Fig. 11

Fig. 12

Fig. 13(a)

Fig. 13(b)

Fig. 14

Fig. 15(a)

Fig. 15(b)

Fig. 15(c)

Fig. 16

(a)

(b)

$U_{1,s} = U_{2,s} = U_{3,s} = 525\,V$
$U_{1,s} = U_{2,s} = U_{3,s} = 700\,V$
$U_{1,s} = U_{2,s} = U_{3,s} = 1050\,V$

$\dfrac{P_{1,s}}{U_{1,s}} = \dfrac{P_{2,s}}{U_{2,s}} = \dfrac{P_{3,s}}{U_{3,s}}$

EP 3 633 839 A1

Fig. 17

Fig. 18

Fig. 19

Fig. 20

Fig. 21

Fig. 22

**Europäisches Patentamt**
**European Patent Office**
**Office européen des brevets**

## EUROPÄISCHER RECHERCHENBERICHT

**Nummer der Anmeldung**

EP 18 19 8696

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | XP055579439 | 1-3, 12-15 | INV. H02M3/335 |
| A | * Abbildung 4.12 * <br> * Seite 73 - Seite 85 * | 4-11 | |
| A | SCHAFER JANNIK ET AL: "Multi-port multi-cell DC/DC converter topology for electric vehicle's power distribution networks", <br> 2017 IEEE 18TH WORKSHOP ON CONTROL AND MODELING FOR POWER ELECTRONICS (COMPEL), IEEE, <br> 9. Juli 2017 (2017-07-09), Seiten 1-9, XP033144074, <br> DOI: 10.1109/COMPEL.2017.8013326 <br> [gefunden am 2017-08-18] <br> * Abbildungen 2,5 * <br> * Absatz [00II] * | 1-15 | |
| A | US 2016/336873 A1 (AYAI NAOKI [JP]) <br> 17. November 2016 (2016-11-17) <br> * Abbildung 1 * | 1-15 | RECHERCHIERTE SACHGEBIETE (IPC) <br><br> H02M |

Der vorliegende Recherchenbericht wurde für alle Patentansprüche erstellt

| Recherchenort | Abschlußdatum der Recherche | Prüfer |
|---|---|---|
| Den Haag | 11. April 2019 | Gotzig, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 19 8696

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-04-2019

| Im Recherchenbericht angeführtes Patentdokument | Datum der Veröffentlichung | Mitglied(er) der Patentfamilie | Datum der Veröffentlichung |
|---|---|---|---|
| US 2016336873 A1 | 17-11-2016 | CN 105934874 A | 07-09-2016 |
| | | EP 3093973 A1 | 16-11-2016 |
| | | JP 6176121 B2 | 09-08-2017 |
| | | JP 2015133814 A | 23-07-2015 |
| | | KR 20160106090 A | 09-09-2016 |
| | | TW 201539967 A | 16-10-2015 |
| | | US 2016336873 A1 | 17-11-2016 |
| | | WO 2015105069 A1 | 16-07-2015 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **H. WREDE ; V. STAUDT, A. STEIMEL.** Design of an Electronic Power Transformer. *28th Annual Conference of the IEEE Industrial Electronics Society (IECON 2002),* 1380-1385
- **H. WREDE ; V. STAUDT ; A. STEIMEL.** A Soft-Switched Dual Active Bridge 3DC-to-1DC Converter employed in a High-Voltage Electronic Power Transformer. *10th European Conference on Power Electronics and Applications (EPE 2003)*
- Beiträge zur Erhöhung von Versorgungssicherheit und Spannungsqualität in der Übertragung und Verteilung elektrischer Energie durch leistungselektronische Betriebsmittel. **H. WREDE.** Dissertation. Ruhr-Universität Bochum, 2004